# EUROPEAN PATENT APPLICATION

(11) **EP 2 641 703 A1**
(43) Date of publication of application: **25.09.2013**
(21) Application number: 12199479.2
(22) Date of filing: 27.12.2012
(51) Int. Cl.: B25J 15/04

(54) **Robot system, robot hand, and robot system operating method**

(30) Priority: 19.03.2012 JP 2012061608; 19.03.2012 JP 2012061506; 19.03.2012 JP 2012061507
(71) Applicant: Kabushiki Kaisha Yaskawa Denki, Kitakyushu-Shi, Fukuoka 806-0004 (JP)
(72) Inventor: Kimura, Kaoru, Kitakyushu-shi, Fukuoka 802-0003 (JP); Mizoguchi, Hiromi, Kitakyushu-shi, Fukuoka 802-0003 (JP); Yamamoto, Yoshiaki, Kitakyushu-shi, Fukuoka 806-0004 (JP)
(74) Representative: Viering, Jentschura & Partner

(57) **Abstract**

A robot system (1) comprises a robot arm (12), a robot hand (13) provided to the robot arm (12), and a plurality of finger members (40) for holding a target object (W; 200), installed to the robot hand (13). The robot hand (13) comprises a hand main body portion (131) which is connected to the robot arm (12) and comprises an actuator, and a finger holding mechanism (132) which replaceably holds at least a pair of the finger members (40) is connected to the hand main body portion (131) and is driven by the actuator.

## Description

### Field of the Invention

The present disclosure relates to a robot system, a robot hand, and a robot system operating method.

### Description of the Related Art

In the prior art, an arrangement for mounting a robot hand to an end portion of a robot arm provided to a robot is disclosed (for example, Japanese patent laid-open H09-277187). In this prior art, an auto tool changer (ATC) is installed to the end portion of the robot arm (arm). Further, an ATC configured to connect with the ATC on the robot arm side is installed to the upper end portion of a plurality of robot hands (hands) placed on a table. Then, the robot hand of the plurality of robot hands placed on the table that is suitable for the work is selected. Subsequently, the robot hand is mounted to the end portion of the robot arm via both the ATC on the robot arm side and the ATC on the robot hand side.

There is also disclosed safety monitoring device which monitor the safety of a single work area (for example, Japanese Patent laid-open H11-165291). According to this prior art, an alarm is issued when a robot is operating and a person or object enters the operating range of the robot. The term "work area" here refers to a location or area in which the robot is capable of independently performing production or processing work, etc.

Further, there have been proposed robot systems configured to control a robot and an external mechanism provided to the robot exterior (for example, Japanese Patent laid-open S63-216689; Japanese Patent laid-open 2009-148869; and Japanese Patent laid-open 2006-035346). According to these robot systems, the robot and the external mechanism are interlocked to perform work in coordination.

According to the prior art described in the JP, A, 09-277187, the plurality of robot hands is selectively used in accordance with the shape, size, etc., of the target object, for example. Nevertheless, in general, an actuator is required for each robot hand, resulting in the problem of an increased cost burden when a plurality of robot hands is selectively used.

On the other hand, there are robot systems that share at least one robot in a plurality of work areas. Such a robot system that shares a robot suppresses the equipment investment compared to a case where a dedicated robot is provided to each work area. With this robot system, it is conceivable that a person who engages in a preparation process for robot work (hereinafter "preparer") may perform the preparation process in advance in a work area where a robot does not exist, while the robot is performing work in the work area where the robot exists. In such a case, the rate of operation of the robot can be increased, improving efficiency. However, the operating ranges of the person (the preparer) and the robot need to be clearly separated and monitored from the viewpoint of safety monitoring. Accordingly, the work performed by the robot must be appropriately stopped according to circumstance. According to the prior art described in the JP, A, 11-165291, the positional relationship between a robot and a sensor is fixed, and the safety of a single work area is monitored. Thus, the safety monitoring of each work area in a situation where one or a few robots exist in a plurality of work areas has not particularly been taken into consideration.

Further, there are robot systems comprising a plurality of robots in a plurality of work areas. Such a robot system suppresses the equipment investment compared to a case where a dedicated robot is provided to each work area. In this case, a moving mechanism that moves robots needs to be separately prepared to move robots between work areas. Nevertheless, the moving of robots between work areas substantially occurs only before work begins and after work ends in each work area. Thus, providing a full-time moving mechanism for simply moving robots is an excessive specification, and not preferred. According to the prior art described in the JP, A, 63-216689, JP, A, 2009-148869, and JP, A, 2006-035346, such a point has not particularly been taken into consideration.

It is therefore a first object of the present invention to provide a robot system and a robot hand capable of reducing cost.

It is a second object of the present invention to provide a robot system and a robot system operating method in which a preparer can perform a preparation process in a separate work area where a robot does not exist while a robot is made to perform work in a certain work area of a plurality of work areas.

It is a third object of the present invention to provide a configuration of a robot system comprising a plurality of robots in a plurality of work areas wherein excessive specifications are prevented and optimal specifications are achieved, and a robot system operating method that is executed by that system.

### SUMMARY OF THE INVENTION

In order to achieve the first object, according to one aspect of the disclosure, there is provided a robot system, comprising a robot arm, a robot hand provided to the robot arm, and a plurality of finger members for holding a target object, installed to the robot hand. The robot hand comprises a hand main body portion which is connected to the robot arm and comprises an actuator, and a finger holding mechanism which replaceably holds at least a pair of finger members is connected to the hand main body portion and is driven by the actuator.

In order to achieve the second object, according to another aspect of the disclosure, there is provided a robot system comprising a robot configured to perform work in one of a plurality of work areas, comprising a plurality of sensors configured to detect the presence of a person, respectively provided to the plurality of the work areas, and a control portion which stops the robot which exists in one work area when the sensor provided to the one work area detects the presence of a person, regardless of whether or not the sensor provided to another work area other than the one work area where the robot exists has detected the presence of a person.

In order to achieve the third object, according to another aspect of the disclosure, there is provided a robot system comprising a first robot comprising a first drive portion configured to achieve various postures for performing predetermined work, a second robot comprising a second drive portion configured to achieve various postures for performing predetermined work, a guide portion configured to, in coordination with the first drive portion of the first robot and the second drive portion of the second robot, moveably support the first robot and the second robot, and a control portion configured to control in coordination the first drive portion and the second drive portion so that an operation of the predetermined work of the first robot and the second robot is linked with a location movement of the first robot and the second robot along the guide portion.

### Advantages of the Invention

According to the robot system and the robot hand of the present disclosure, it is possible to reduce cost.

Further, according to the robot system and robot system operating method of the present disclosure, it is possible for a preparer to perform a preparation process in a work area where a robot does not exist while making a robot perform work. As a result, the rate of operation of the robot can be increased, improving efficiency.

Further, according to the robot system and robot system operating method of the present disclosure, a first drive portion and a second drive portion have a role of moving each robot to any work area as well as a role of changing a posture of a robot to perform predetermined work. That is, it is possible to perform work using a single robot or a plurality of robots in coordination, in accordance with work details. Accordingly, it is possible to prevent specifications from becoming excessive, such as in a case where a full-time mechanism is provided for simply moving robots.

### BRIEF DESCRIPTION OF THE DRAWINGS

FIG. 1 is a system configuration diagram schematically showing the overall configuration of a robot system of first embodiment.
FIG. 2 is an explanatory view schematically showing the configuration of the robot.
FIG. 3 is an explanatory view for explaining the configuration of the hand.
FIG. 4 is an explanatory view for explaining the configuration of the finger holding portion.
FIG. 5 is an explanatory view for explaining the configuration of the finger holding portion.
FIG. 6 is a perspective view showing the outer appearance of the finger storage box and pressing device.
FIG. 7 is an explanatory view for explaining the operation of installing the finger member to the finger holding mechanism.
FIG. 8 is an explanatory view for explaining the operation of removing the finger member from the finger holding mechanism.
FIG. 9 is an explanatory view for explaining the work procedure of the robot system.
FIG. 10 is an explanatory view for explaining the work procedure of the robot system.
FIG. 11 is an explanatory view for explaining the work procedure of the robot system.
FIG. 12 is an explanatory view for explaining the work procedure of the robot system.
FIG. 13 is an explanatory view for explaining the work procedure of the robot system.
FIG. 14 is an explanatory view showing the nut runner, end tool, and connecting member of a modification wherein an end tool of a nut runner is automatically replaceable.
FIG. 15 is an explanatory view schematically showing the configuration of the nut runner and end tool.
FIG. 16 is a diagram showing an overview of the robot system according to second embodiment.
FIG. 17 is a plan view showing the process layout of second embodiment.
FIG. 18 is a flowchart showing an outline of the safety monitoring operation of the robot system during work.
FIG. 19 is a flowchart showing an outline of the safety monitoring operation of the robot system during movement.
FIG. 20 is a diagram showing an overview of a robot system according to a modification in which a single robot is shared between two work areas.
FIG. 21 is a plan view showing a process layout of a modification in which a single robot is shared between two work areas.
FIG. 22 is a diagram showing an overview of a robot system according to a modification in which two robots are shared between three work areas.
FIG. 23 is a plan view showing a process layout of a modification in which two robots are shared between three work areas.
FIG. 24 is a schematic view showing the work steps that use a robot system according to a modification in which two robots are shared between three work areas.

### DESCRIPTION OF THE EMBODIMENTS

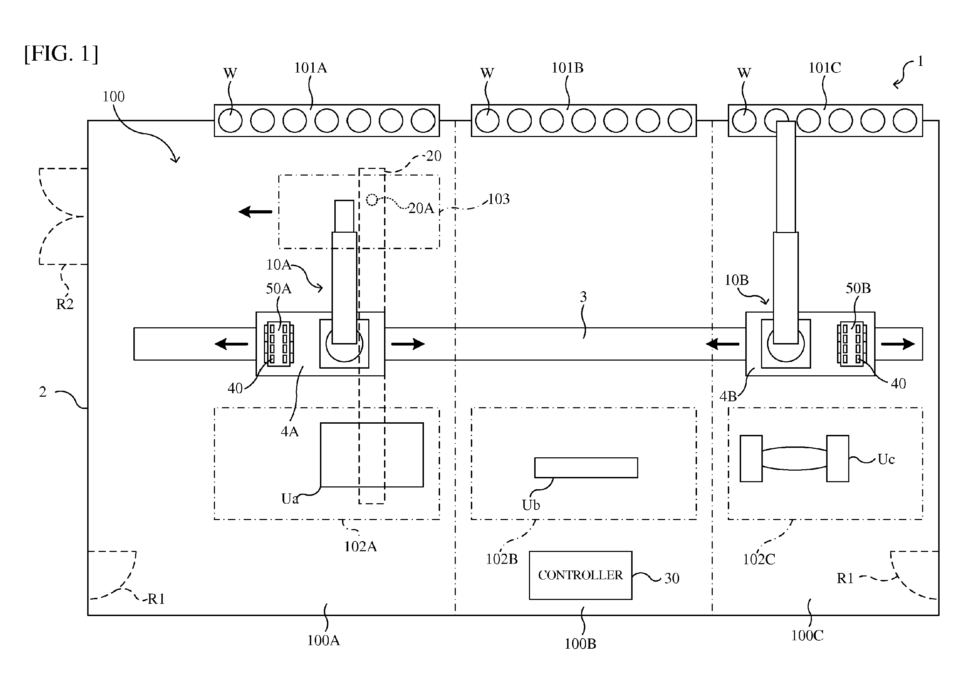

Embodiments will now be described with reference to accompanying drawings. First embodiment will be described with reference to FIG. 1 to FIG. 15.

As shown in FIG. 1, a robot system 1 of this embodiment is provided to a work area 100. The work area 100 is an area for performing the work of assembling mechanical products, which includes a plurality of processes. The circumference of the work area 100 is enclosed by a fence 2, restricting human entry. A door R1 for the entry and exit of maintenance workers is provided in two locations in this work area 100. Further, the work area 100 is divided into three areas: areas 100A, 100B, and 100C. Work tables 101A, 101B, and 101C are respectively provided to each of the areas 100A to 100C. Further, a door R2 for transporting items in and out is provided to the area 100A. Further, in the work area 100, a plurality (plurality of types) of works W (target objects) such as parts or tools required by the work is respectively placed on the work tables 101A to 101C and in suitable locations.

The robot system 1 comprises two traveling carts 4A and 4B, two robots 10A and 10B, an overhead crane (in this example, a hoist) 20, and a controller 30. The traveling carts 4A and 4B travel across a traveling axis 3 provided across the three areas 100A to 100C.

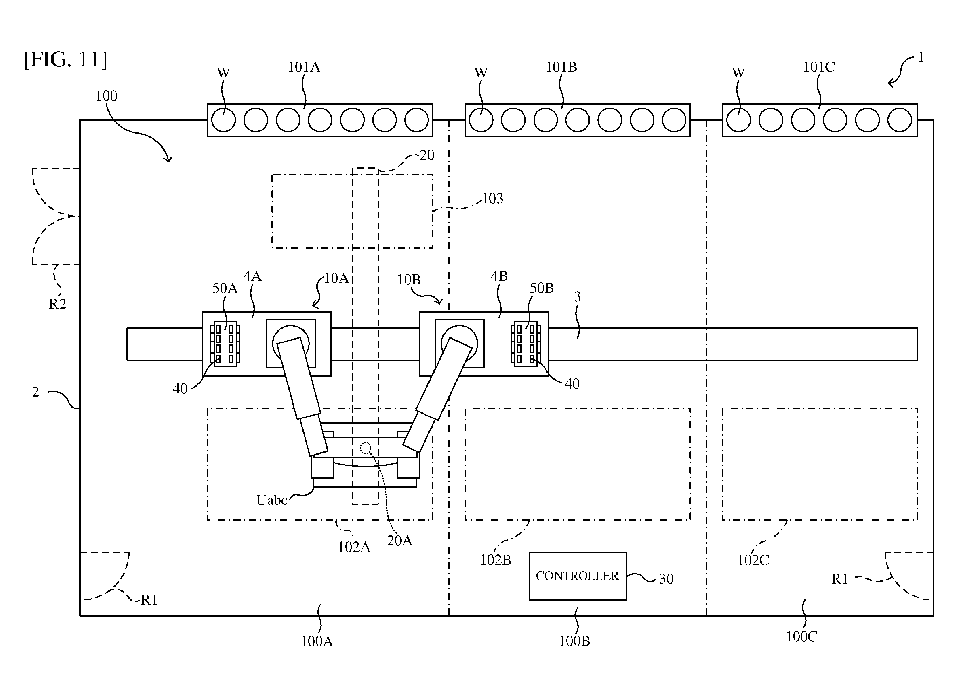

According to this robot system 1, in each of the areas 100A to 100C, a plurality of the works W is assembled. With this arrangement, an assembly process of units Ua, Ub, and Uc, which are semi-finished parts, is performed. That is, the units Ua, Ub, and Uc each constitute an aggregate of the plurality of works W. Subsequently, the units Ua, Ub, and Uc are further assembled to manufacture a unit Uabc (refer to FIG. 11, etc., described later) as a final assembly. According to this embodiment, this unit Uabc is the final work piece (details described later).

Each of the robots 10A and 10B is respectively provided onto the traveling carts 4A and 4B.

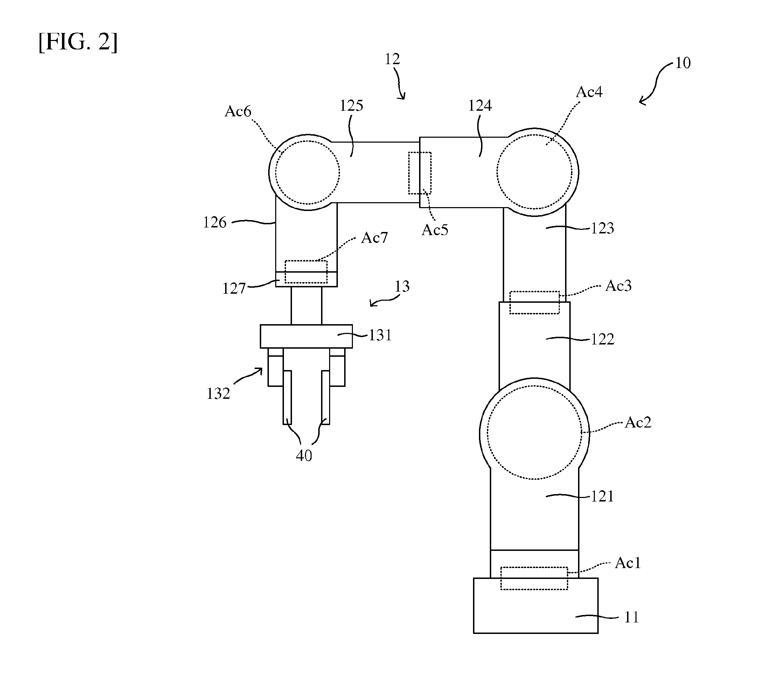

Further, a plurality of (pairs of) finger members 40 for grasping the work W is provided to the robot system 1. The finger member 40 is installed to a hand 13 (refer to FIG. 2 described later) of each of the robots 10A and 10B. For example, there are about 1 to 10 types of the works W that can be held by one type of the finger member 40 (the work W held by each of the finger members 40 has been determined). As a result, the finger member 40 needs to be selectively used to hold all of the works W. Of the plurality of pairs of finger members 40, four specific pairs of the finger members 40 (finger members 40 having a high usage frequency, for example) are stored in finger storage boxes 50A and 50B. The finger storage boxes 50A and 50B are respectively provided on the traveling carts 4A and 4B in correspondence with each of the robots 10A and 10B. That is, each of the robots 10A and 10B and each of the finger storage boxes 50A and 50B are movable along the traveling axis 3. With this arrangement, the robots 10A and 10B are capable of performing coordinated operations, such as holding and transporting in coordination the works W of a large weight and capacity, for example, when moved near each other. Note that, while not particularly shown, the finger members 40 that are only used in a specific area (the finger members 40 having a low usage frequency, etc.) are stored in a finger storage box 50 disposed in a location where the finger members 40 are used.

Further, work areas 102A, 102B, and 102C are respectively provided to each of the areas 100A to 100B. A work table (not shown) and the like, for example, are provided to each of the work areas 102A, 102B, and 102C. Further, a transporting cart 103 is arranged on a side opposite to the work area 102A, with the traveling axis 3 therebetween. The transporting cart 103 is capable of carrying and moving the unit Uabc to the next process (not shown) via the door R2.

The hoist 20 is an overhead crane provided above the work area 100. From the traveling rail (not shown) of the hoist 20 hangs a suspension hook 20A. Then, the hoist 20 is capable of winding and unwinding the suspension hook 20A via the control of the controller 30. This hoist 20 suspends and supports the unit Uabc, etc., which is one example of a work of a large weight and capacity. For example, the robots 10A and 10B which operate in coordination and this hoist 20 hold and transport the unit Uabc. Specifically, the hoist 20 supports the vertical force (weight) applied by the unit Uabc. At this time, the robots 10A and 10B hold the unit Uabc so that it does not rotate. In this state, the unit Uabc is held and transported by being moved horizontally and fixed into a certain position/posture.

The controller 30 is made of a computer comprising a storage device, electronic computing device, and input device (each not shown). This controller 30 is communicably connected with the robots 10A and 10B, the hoist 20, and the traveling carts 4A and 4B, controlling the operation thereof. Further, the aspects of the operation of the robots 10A and 10B, the hoist 20, and the traveling carts 4A and 4B in the work are taught to the controller 30 via a suitable input device (a programming pendant, for example) in advance.

Note that, according to this example, the controller 30 controls the operation of the robots 10A and 10B, the hoist 20, and the traveling carts 4A and 4B. Nevertheless, the present disclosure is not limited thereto. That is, for example, the computer that controls the operation of the robot 10, the computer that controls the operation of the hoist 20, and the computer that controls the operation of the traveling carts 4 may be configured separately.

As shown in FIG. 2, the robot 10 comprises a base 11 fixed on the traveling cart 4, an arm 12 (robot arm) provided to this base 11, and the hand 13 (robot hand) provided to the end of this arm 12.

The arm 12 comprises a first structural member 121, a second structural member 122, a third structural member 123, a fourth structural member 124, a fifth structural member 125, a sixth structural member 126, and a flange portion 127. Further, actuators Ac1, Ac2, Ac3, Ac4, Ac5, Ac6, and Ac7 are respectively built into seven joint portions provided to the arm 12 (the first to sixth structural members 121 to 126 and the flange portion 127). The rotational position of each movable portion is inputted to the controller 30 as a signal from an encoder built into the actuator Ac.

The hand 13 comprises a hand main body 131 installed to the flange portion 127 provided to the end of the arm 12, and a finger holding mechanism 132 installed to this hand main body 131. An actuator (not shown) comprising a servo motor is built into the hand main body 131. The rotational position of the movable portion is inputted to the controller 30 as a signal from an encoder built into the actuator. The finger holding mechanism 132 replaceably holds a pair of the finger members 40 of the plurality of pairs of the finger members 40 (details described later).

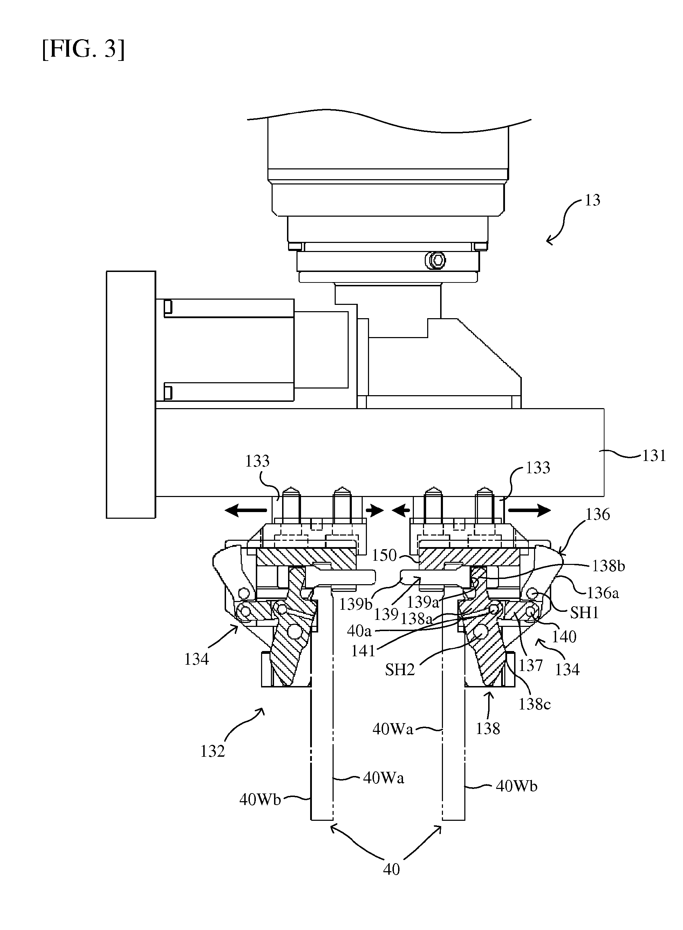

As shown in FIG. 3, a pair of pistons 133 and 133 is provided to the hand main body 131 in an opposing manner. The pair of pistons 133 and 133 is driven in directions mutually away from and toward each other (see the arrows in FIG. 3) by the actuator built into the hand main body 131. The finger holding mechanism 132 comprises a pair of finger holding portions 134 and 134 that are connected to this pair of pistons 133 and 133. The pair of the finger holding portions 134 and 134 is configured bilaterally symmetrical. The pair of the finger holding portions 134 and 134 is capable of moving in directions mutually away from and toward each other, interlocked with the drive of the pair of pistons 133 and 133, and replaceably holds the pair of the finger members 40 and 40.

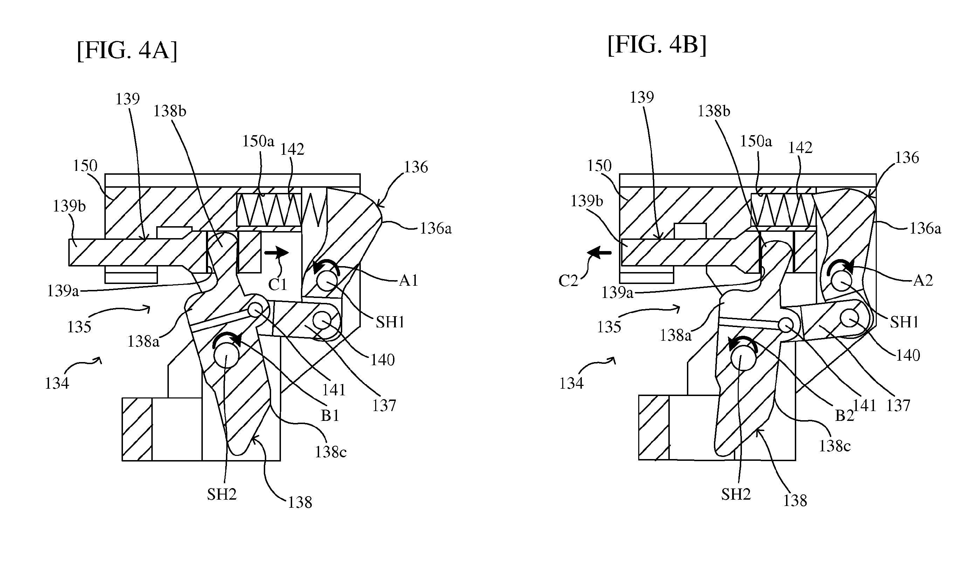

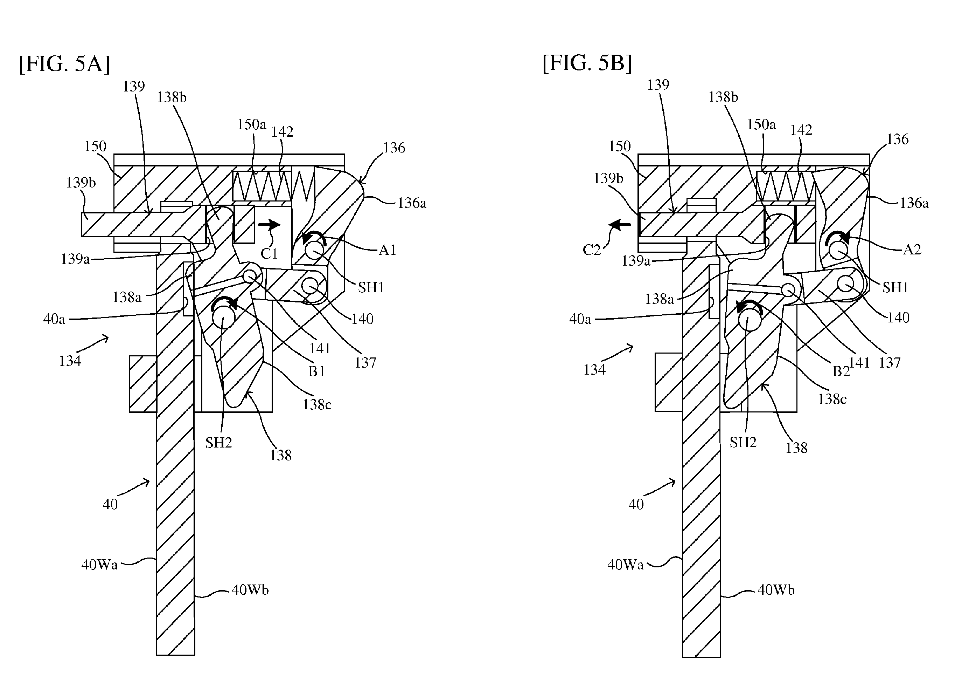

The following describes the detailed structure of the finger holding portion 134 using FIG. 3, FIG. 4, and FIG. 5. Note that FIG. 4 shows states in which the finger holding portion 134 is not holding the finger member 40. Of these, FIG. 4A corresponds to the state in which a link member 138 (described later) is in an engaged posture (described later). FIG. 4B corresponds to the state in which the link member 138 (described later) is in a released posture (described later). Note that FIG. 5 shows states in which the finger holding portion 134 is holding the finger member 40. Of these, FIG. 5A corresponds to the state in which the link member 138 (described later) is in an engaged posture (described later). FIG. 5B corresponds to the state in which the link member 138 (described later) is in a released posture (described later).

As shown in FIGS. 3, 4A, 4B, 5A, and 5B, each of the finger holding portions 134 is a link mechanism comprising a finger holding portion main body 150, a receiving space 135, four link members 136, 137, 138, and 139, two axises SH1 and SH2, two connecting members 140 and 141, and a compression spring 142 (elastic member).

The receiving space 135 is a space configured to receive (insert) the finger member 40, and is provided to a side opposite to the other finger holding member 134 (the inner side).

The link member 136 (second link member) is provided rotatably around the axis SH1 (second rotation axis). An end side of this link member 136 is a surface that is partially externally exposed. This surface 136a links to the operating surface. Hereinafter, this surface 136a is suitably called the operating surface 136a. The other end side of the link member 136 is connected with an end side of the link member 137 via the connecting member 140. Further, the link member 136 is energized by the compression spring 142 housed in a concave portion 150a provided to the finger holding portion main body 150 to form the posture shown in FIG. 4A and FIG. 5A when the operating surface 136a is not pressed. That is, the compression spring 142 is energized so that the link member 136 forms the posture shown in FIG. 4A and FIG. 5A when the operating surface 136a is not pressed. Then, when the operating surface 136a is pressed when the posture is as shown in FIG. 4A and FIG. 5A, the link member 136 rotates in one direction (a first direction; the direction of arrow A1 shown in FIG. 4A and FIG. 5A) around the axis SH1, forming the posture shown in FIG. 4B and FIG. 5B. Then, when the pressed state is released, the link member 136 rotates in the other direction (the direction of arrow A2 shown in FIG. 4B and FIG. 5B) around the axis SH1, returning the posture to that shown in FIG. 4A and FIG. 5A.

The other end side of the link member 137 connects with the link member 138 (first link member) via the connecting member 141. That is, this link member 137 connects the link member 136 and the link member 138.

The link member 138 comprises two protruding portions 138a and 138b. Further, the link member 138 is provided rotatably around the axis SH2 (first rotation axis). Then, the link member 138 is configured so that it is capable of transitioning between the engaged posture (the posture shown in FIG. 4A and FIG. 5A) and the released posture (the posture shown in FIG. 4B and FIG. 5B) by rotating around the axis SH2. In the engaged posture, the link member 138 engages the finger member 40 inserted in the receiving space 135. In the released posture, the link member 138 releases the engagement of the finger member 40. That is, when the link member 138 is in an engaged posture, the protruding portion 138a protrudes inside the receiving space 135. With this arrangement, the protruding portion 138a is capable of contacting a surface 40Wb of the finger member 40 inserted into the receiving space 135, on a side opposite to a surface 40Wa that contacts the work W. Then, when the finger member 40 is inserted deep into the receiving space 135, the protruding portion 138a engages with a concave portion 40a provided to the surface 40Wb of the finger member 40. With this arrangement, the finger member 40 is engaged at that position (the position shown in FIG. 3 and FIG. 5A). Further, the link member 138 is partially externally exposed (the section indicated by reference numeral 138c in the figure). Note that the section indicated by this reference numeral 138c is hereinafter suitably called operating portion 138c.

A concave portion 139a is provided to the link member 139. The protruding portion 138b of the link member 138 is fit into this concave portion 139a, thereby connecting the link members 138 and 139. Further, an end portion 139b of the link member 139 is externally exposed. Note that this end portion 139b is hereinafter suitably called the operating portion 139b.

With the link members 136 to 139 thus connected, the link members 136 to 139 are interlocked. According to this embodiment, the link members 136 to 139 can be interlocked by pressing the operating surface 136a of the link member 136, the operating portion 138c of the link member 138, or the operating portion 139b of the link member 139.

That is, the link member 136 is energized by the compression spring 142 as described above when the operating surface 136a, the operating portion 138c, and the operating portion 139b are not pressed. With this arrangement, the link members 136 to 139 form the postures shown in FIG. 4A and FIG. 5A. That is, the link member 138 forms the engaged posture.

At such a time, when the operating surface 136a, the operating portion 138c, or the operating portion 139b is pressed, the link member 136 rotates in the direction of the arrow A1. Further, the link member 138 rotates in one direction (a second direction; the direction of arrow B1 shown in FIG. 4A and FIG. 5A) around the axis SH2. Furthermore, the link member 139 is driven in one direction (the direction of arrow C1 shown in FIG. 4A and FIG. 5A). Thus, the link members 136 to 139 are interlocked, causing the link members 136 to 139 to form the posture shown in FIG. 4B and FIG. 5B. That is, the link member 138 is in the released posture.

Then, when the pressed state is released, the link member 136 rotates in the direction of the arrow A2. Further, the link member 138 rotates in the other direction (the direction of arrow B2 shown in FIG. 4B and FIG. 5B) around the axis SH2. Furthermore, the link member 139 is driven in the other direction (the direction of arrow C2 shown in FIG. 4B and FIG. 5B). Thus, the link members 136 to 139 are interlocked, causing the link members 136 to 139 to return to the posture shown in FIG. 4A and FIG. 5A. That is, the link member 138 returns to the engaged posture.

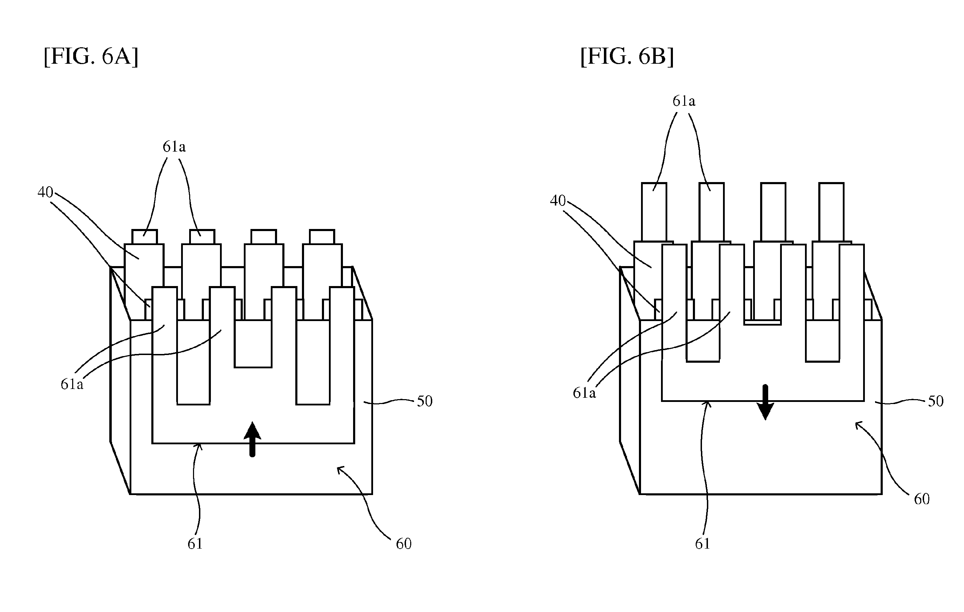

As shown in FIGS. 6A and 6B, the finger storage box 50 stores four specific pairs of the finger members 40. A pressing device 60 is installed to this finger storage box 50. The pressing device 60 comprises a pair of pressing members 61 comprising four protruding portions 61a. Each of the pressing members 61 is provided to an outer wall portion of the finger storage box 50 in correspondence with the four specific pairs of the finger members 40 stored in the finger storage box 50. The pressing device 60 is communicably connected with the controller 30. The operation of the pressing device 60 (vertical drive of the pair of the pressing members 61 described later, etc.) is controlled by the controller 30. Note that the computer that controls the operation of the pressing device 60 may be provided separately from the controller 30.

The pair of pressing members 61 and 61 is configured to be vertically driveable. When the pair is driven upward, the end portions of the pair of the protruding portions 61a provided to the pair of the pressing members 61 come in contact with and press against the operating surface 136a of the link member 136 of the pair of the finger holding portions 134 of the robot 10. With this arrangement, the holding of the pair of the finger members 40 by the pair of the finger holding portions 134 is released. The pair of the finger members 40 released from the hold by the pair of the finger holding portions 134 drop due to gravitational force, and are stored in the finger storage box 50.

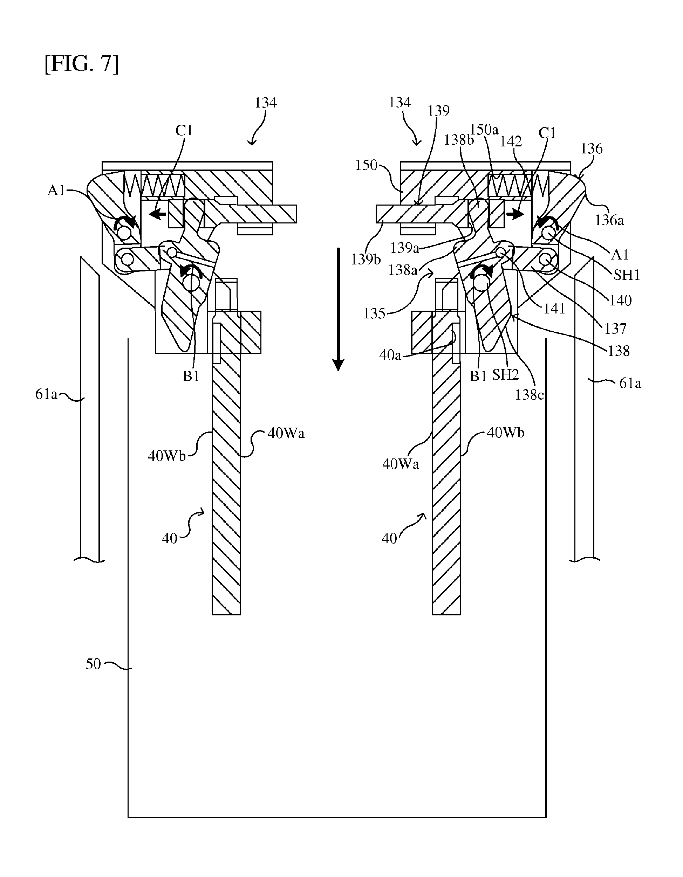

That is, the pair of the finger members 40 corresponding to the shape, size, etc. of the work W serving as the holding target in the next work process is installed to the finger holding mechanism 132. In this case, the robot 10 operates so that the receiving spaces 135 respectively provided to the pair of the finger holding portions 133 and 133 of the finger holding mechanism 132 are positioned above the pair of the finger members 40 and 40 stored in the finger storage box 50. Subsequently, as shown in FIG. 7, the robot 10 lowers the hand 13 and inserts the finger member 40 into the receiving space 135. At this time, when the finger member 40 is inserted a certain extent into the receiving space 135, the protruding portion 138a of the link member 138 contacts an end portion (upper end portion in FIG. 7) of the finger member 40, and the end portion presses against the protruding portion 138a. With this arrangement, the link members 136 to 139 are interlocked, causing the link member 138 that forms an engaged posture to rotate in the direction of the arrow A1 and in the direction of the arrow B1. Further, the link member 139 is driven in the direction of the arrow C1. Subsequently, when the finger member 40 is inserted deep into the receiving space 135, the protruding portion 138a is inserted into the concave portion 40a of the finger member 40. Then, the link member 138 rotates in the direction of the arrow A2 and in the direction of the arrow B2. Further, the link member 139 is driven in the direction of the arrow C2. With the link members 136 to 139 thus interlocked, the protruding portion 138a engages with the concave portion 40a, and the finger member 40 is installed to the finger holding mechanism 132.

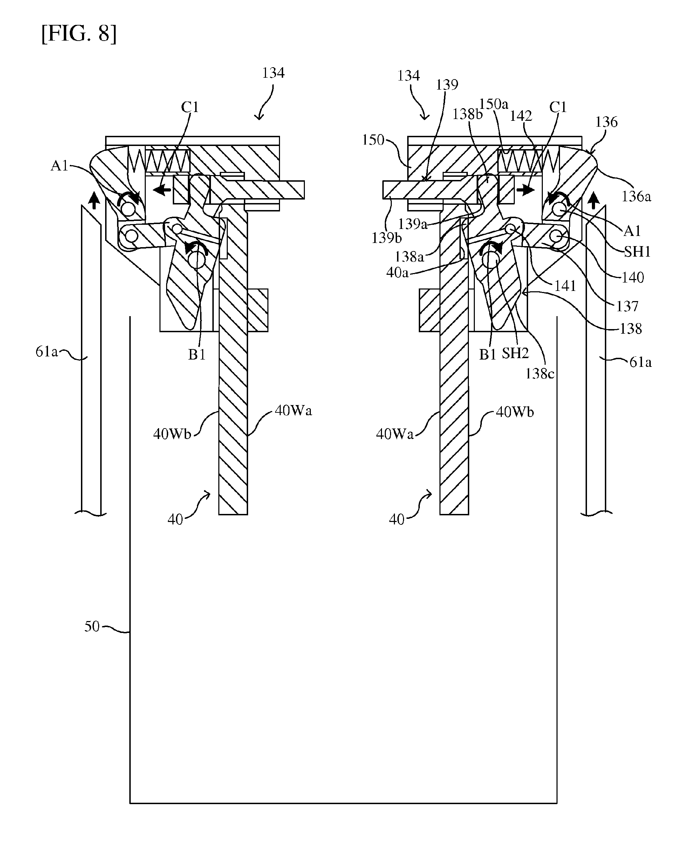

On the other hand, when the finger member 40 is removed from the finger holding mechanism 132, the robot 10 operates so that the operating surface 136a of the link member 136 is positioned above the pair of the protruding portions 61a of the pressing device 60. The protruding portion 61a at this time is provided to a location corresponding to the location in which the pair of installed finger members 40 is stored. Then, as shown in FIG. 8, the pair of the pressing members 61 of the pressing device 60 is driven upward by the control of the controller 30, causing the protruding portions 61a of the pressing members 61 to press against the operating surface 136a. With this arrangement, the link member 138, which is in the engaged posture, rotates in the direction of the arrow A1 and in the direction of the arrow B1. Further, the link member 139 is driven in the direction of the arrow C1. With the link members 136 to 139 thus interlocked, the engagement of the concave portion 40a of the finger member 40 by the protruding portion 138a of the link member 138 changes to a released state. As a result, the finger member 40 is removed from the finger holding mechanism 132. The removed finger member 40 drops by gravitational force and is stored in its original position in the finger storage box 50.

Accordingly, for example, when the process transitions to a process in which the work W is to be grasped, the robot 10 installs the finger members 40 corresponding to the shape, size, etc. of the work W to the finger holding mechanism 132 as described above, and grasps the work W. Then, when the process transitions to a process in which the work W that cannot be grasped by the finger members 40 installed in the current stage to the finger holding mechanism 132 is to be grasped, the robot 10 removes the finger members 40 as described above, installs other finger members 40 corresponding to the shape, size, etc. of the work W, and grasps the work W.

The following describes the work procedure of the robot system 1, using FIGS. 1, 9, 10, 11, 12, and 13.

First, as shown in FIG. 1, in each of the areas 100A to 100C, the robots 10A and 10B (or either one) grasp the work W on the work tables 101A to 101C as described above, and assemble the units Ua, Ub, and Uc. The work at this time is performed following a work procedure stored in advance in the controller 30. Note that the assembly work of the units Ua, Ub, and Uc may be executed well consecutively or in parallel by the robots 10A and 10B.

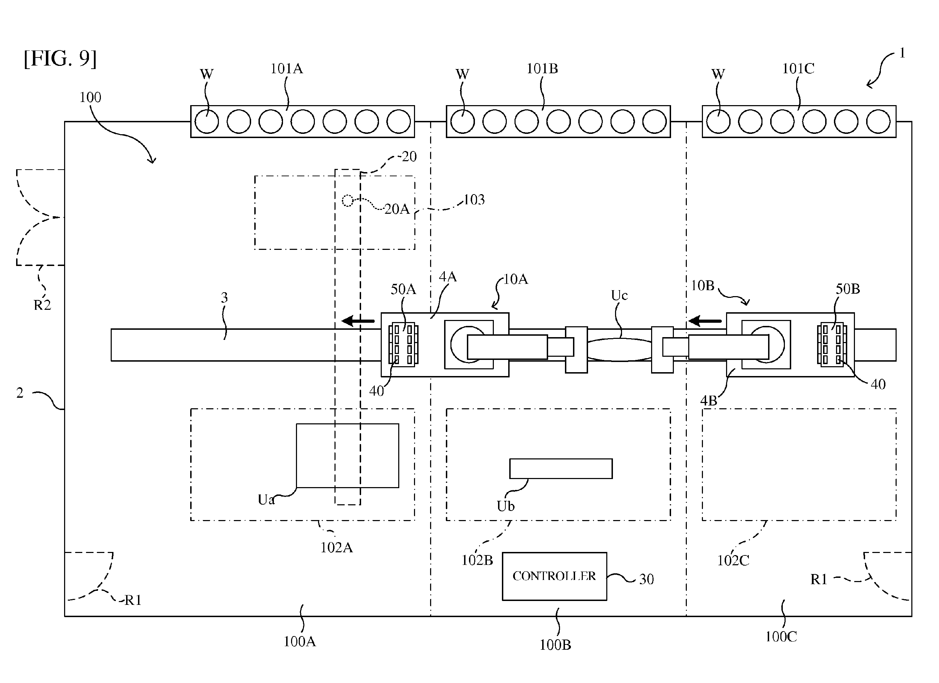

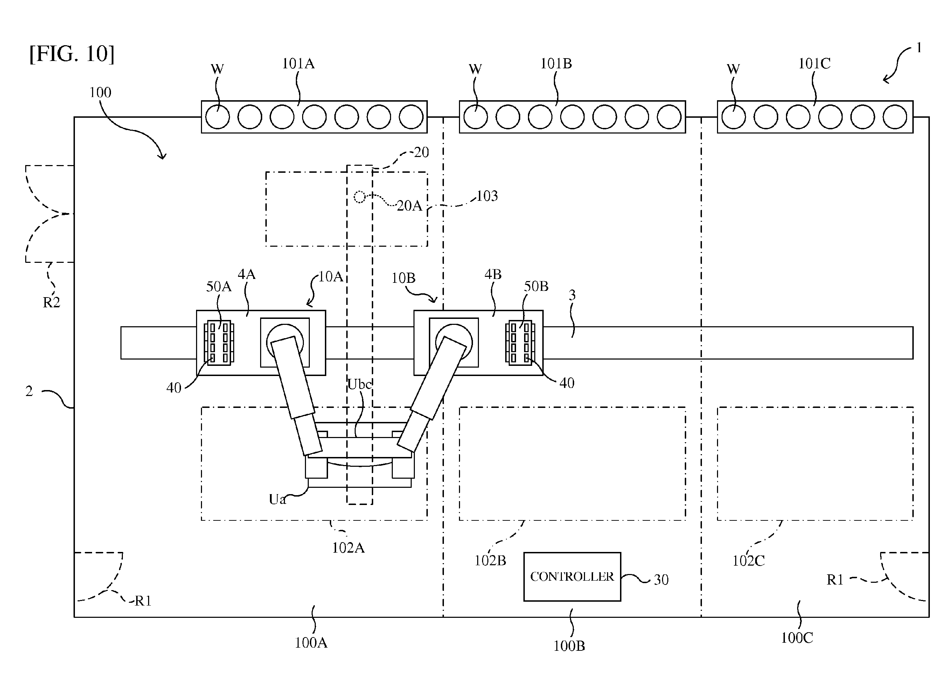

Once the assembly work of the units Ua, Ub, and Uc is completed, the robots 10A and 10B respectively install the finger members 40 for holding the unit Uc to the finger holding mechanism 132 of the hand 13. Then, the robots 10A and 10B, as shown in FIG. 9, hold and lift the unit Uc in coordination, moving the unit Uc directly above the traveling axis 3. Subsequently, the traveling carts 4A and 4B operate, moving the unit Uc from the area 100C to the area 100B. Then, the assembly work of the unit Uc and the unit Ub is executed in the work area 102B of the area 100B, manufacturing a unit Ubc (refer to FIG. 10 described later), which is a semi-finished part in which the units Uc and Ub are assembled. The unit Ubc, as shown in FIG. 10, is held in coordination by the robots 10A and 10B and provided to a predetermined location on the unit Ua in the work area 102A of the area 100A. Then, the work of assembling the unit Ubc to the unit Ua is executed, manufacturing the unit Uabc (refer to FIG. 11 described later), which is the final work piece.

When the assembly work of the unit Uabc is completed, as shown in FIG. 11, the hoist 20 operates and the suspension hook 20A of the hoist 20 is connected to the unit Uabc by the robots 10A and 10B. Then, the robots 10A and 10B respectively hold determined positions of the unit Uabc. Subsequently, the suspension hook 20A is wound, lifting the unit Uabc.

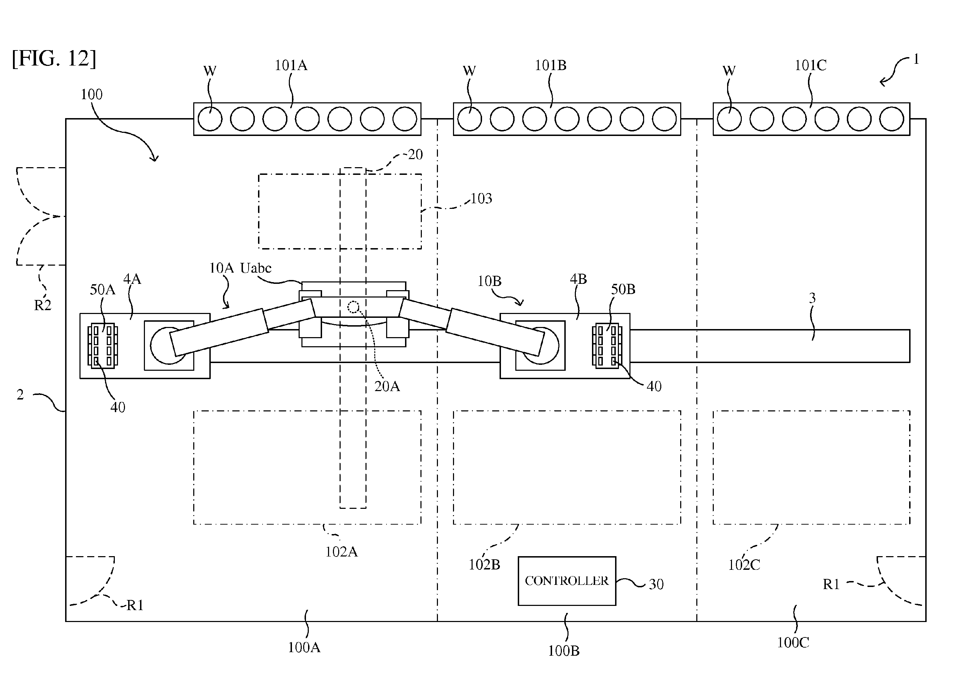

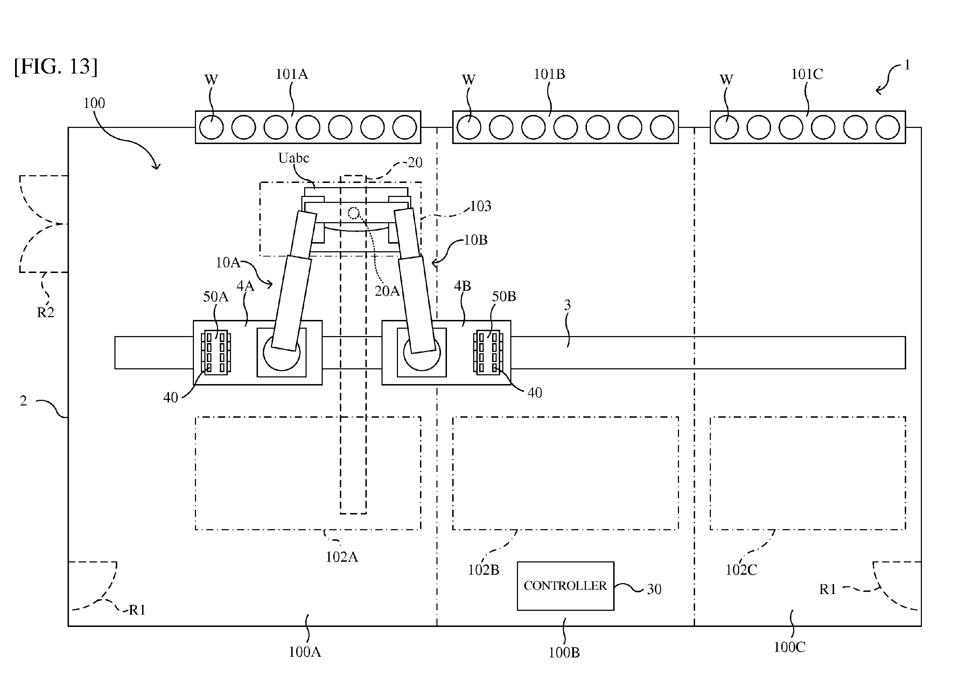

Then, as shown in FIG. 12, with the operation of the traveling carts 4A and 4B, the lifted unit Uabc is moved to the transporting cart 103 side while changing the distance between the robots 10A and 10B. At this time, until the unit Uabc reaches the traveling axis 3, the traveling carts 4A and 4B operate, gradually increasing the distance between the robots 10A and 10B. Then, after the unit Uabc passes the traveling axis 3, as shown in FIG. 13, the traveling carts 4A and 4B operate, gradually decreasing the distance between the robots 10A and 10B.

With the robots 10A and 10B thus operating in coordination, the transporting and assembly work, etc., of the small-sized work W can be executed independently by each of the robots 10A and 10B. Further, when the units Uc and Ubc, which are aggregates of a plurality of the works W, are transported, transportation can be achieved using common robots, even if the weight is heavier, since each of the robots 10A and 10B work in coordination. Further, for the unit Uabc, which is even heavier in weight, each of the robots 10A and 10B and the traveling carts 4A and 4B work in coordination as the load in the direction of gravitational force is supported by the hoist 20. With this arrangement, the unit Uabc can be horizontally moved while avoiding interference and the like of the arms 12 and 12 of the robots 10A and 10B.

As described above, in the robot system 1 of this embodiment, the finger holding mechanism 132 of the hand 13 of the robot 10 replaceably holds a pair of the finger members 40 of the plurality of pairs of the finger members 40. With this arrangement, even in a case where work in which a plurality of the works W of different shapes, sizes, etc., is respectively held, the hand 13 (the actuator of the hand main body portion 131) may be commonly established, and the pair of the finger members 40 mounted to the finger holding mechanism 132 may be simply replaced in accordance with the shape, size, etc., of the work W. As a result, cost can be reduced compared to case where a plurality of hands is prepared and an ATC (auto tool changer) or the like is used to replace these hands in accordance with the shape, size, etc., of the work W, for example. Further, according to this embodiment, a storage space that stores the plurality of pairs of the finger members 40 just needs to be provided. As a result, it is possible to save space compared to a case where space for storing a plurality of hands is provided. As a result, as described above, it is possible to provide the finger storage box 50 that stores a plurality of the finger members 40 on the same traveling cart 4 as the robot 10, and move the finger storage box 40 with the robot 10.

Further, in particular, according to this embodiment, the finger holding mechanism 132 comprises a pair of the finger holding portions 133. Then, each of the finger holding portions 133 of the pair serves as a link mechanism comprising the link members 136 to 139. With this arrangement, the finger member 40 received by the receiving space 135 is engaged by the link member 138, making it possible to hold the finger member 40. Then, the link member 138 in the engaged posture is transitioned to a released posture, releasing the engagement of the finger member 40 by the link member 138 and releasing the hold of the finger member 40.

Further, in particular, according to this embodiment, the link member 136 comprises the exposed operating surface 136a, rotating in the direction of the arrow A1 when the operating surface 136a is pressed. With this arrangement, the operating surface 136a is pressed by the pressing member 61, etc., rotating the link member 136 in the direction of the arrow A1. As a result, the link member 138 in the engaged posture can be transitioned to a released posture. Accordingly, the engagement of the finger member 40 by the link member 138 can be released, thereby releasing the hold of the finger member 40.

Further, in particular, according to this embodiment, each of the finger holding portions 133 of the pair comprises the compression spring 142. Each of the compression springs 142 energizes the link member 136 so that the link member 138 forms an engaged posture when the operating surface 136a is not pressed. With this arrangement, when the operating surface 136a is not pressed, the link member 138 can be changed to an engaged posture. As a result, the finger member 40 can be engaged by the link member 138, making it possible to hold the finger member 40.

Further, in particular, according to this embodiment, the link member 138 comprises the protruding portion 138a, and each of the plurality of finger members 40 comprises the concave portion 40a engaged by the protruding portion 138a of the surface 40 Wb. With the engagement of the concave portion 40a of the finger member 40 received in the receiving space 135 by the protruding portion 138a of the link member 138, it is possible to reliably hold the finger member 40.

Further, in particular, according to this embodiment, the present disclosure comprises the pressing device 60 comprising the pressing member 61 for pressing the operating surface 136a. The operating surface 136a is pressed by the pressing member 61 of the pressing device 60, thereby rotating the link member 138 in the direction of the arrow B1. As a result, the link member 138 in the engaged posture can be transitioned to a released posture. Accordingly, the engagement of the finger member 40 by the link member 138 can be released, thereby releasing the hold of the finger member 40.

Note that the first embodiment is not limited to the contents described above, and various modifications may be made without deviating from the spirit and scope of the disclosure. The following describes such modifications one by one.

### (1-1) When the end tool of the nut runner is automatically replaceable

That is, the nut runner (electric torque wrench) may be held by the finger member 40, and the end tool installed to the end of the held nut runner (electric torque wrench) may be automatically replaceable.

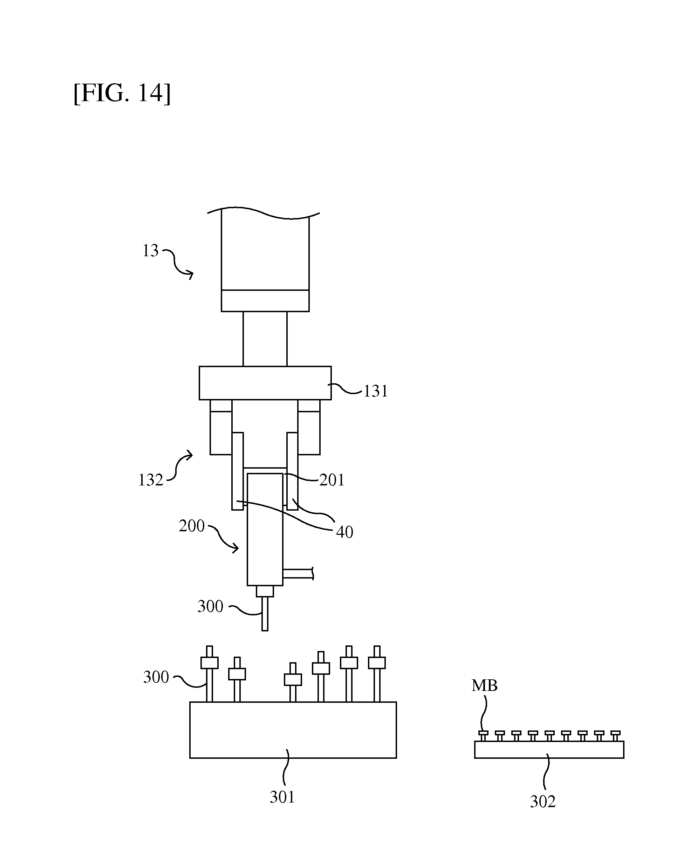

As shown in FIG. 14, in this modification, a nut runner 200 is provided on the transporting cart 4 previously described, for example. The robot 10 holds a held portion 201 of the nut runner 200 using the pair of the finger members 40 installed to the finger holding mechanism 132 of the hand 13. As a result, the robot 10 can hold the nut runner 200. That is, the nut runner 200 also links to the target object.

One of a plurality of end tools 300 is replaceably installable to the end of the nut runner 200. That is, for example, the end tool 300 is prepared in accordance with the type of fastening member MB, such as a screw, bolt, nut, etc., required for tightening together the works W during the assembly work. The plurality of the end tools 300 is inserted into an end tool tray 301 provided on the transporting cart 4 previously above, for example. Further, the fastening member MB is prepared in multiple types, and inserted into a supply tray 302 provided on the work table 101 previously above, for example.

Then, when the process transitions to a process where the tightening of the fastening member MB is performed, the robot 10 installs the finger member 40 corresponding to the shape, size, etc., of the grasped portion 201 of the nut runner 200 to the finger holding mechanism 132 as described above, and grasps the grasped portion 201. With this arrangement, the robot 10 grasps the nut runner 200, installs the end tool 300 corresponding to the type of the fastening member MB required at that time to the end of the grasped nut runner 200, and attaches and tightens the fastening member MB. According to this modification, the replacement of the end tool 300 is not performed by human hands, but is automated.

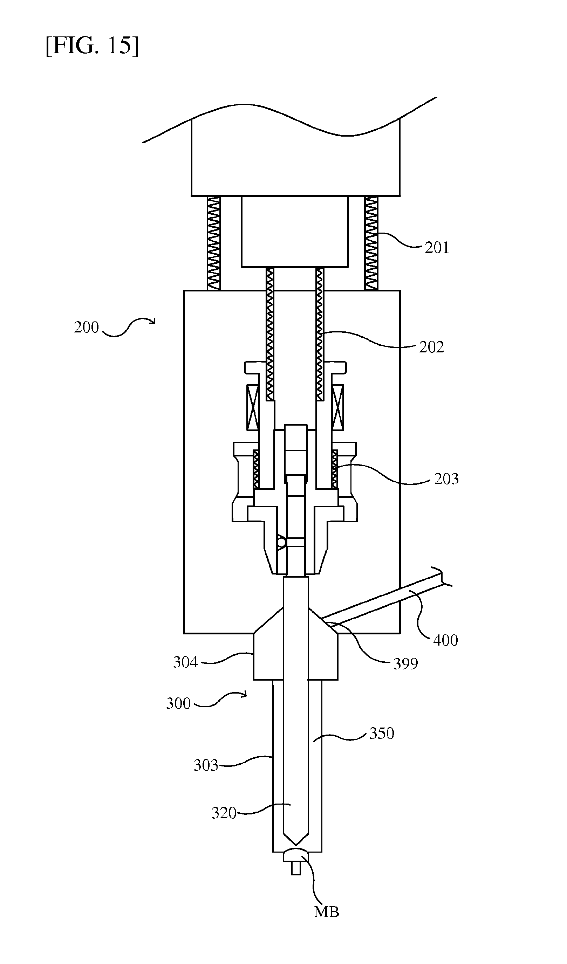

As shown in FIG. 15, three springs 201, 202, and 203 are provided to the nut runner 200. The spring 201 comprises a function that executes a following action when the fastening member MB is tightened. The spring 202 comprises a function that alleviates the impact when tightening is completed. The spring 203 comprises a function for removing the end tool 300. Further, the end tool 300 is installed to the end of the nut runner 200. The end tool 300 comprises a bit 320, a cylindrical sleeve 303, and a cover portion 304 in communication with this sleeve 303. A bit channel 350 is formed on the same axis line as the sleeve 303 and the cover portion 304. The bit 320 is inserted into this bit channel 350. An air-passable channel is formed around the entire circumference, between the bit 320 and the bit channel 350. Further, an opening 399 is formed in the section of the cover portion 340 in which the end portion of the nut runner 200 is fitted. With the end tool 300 installed to the end of the nut runner 200, one end side of an air hose 400 provided to the nut runner 200 is connected to the opening 399. The other end side of the air hose 400 is connected to a suction air pump (not shown), and the air is suction from the bit channel 350 via the air hose 400. With this arrangement, the fastening member MB can be suctioned to the end of the sleeve 303. With such a configuration, even in a case where the end tool 300 is replaced with another, the air hose 400 does not need to be reconnected at that time. As a result, replacement of the end tool 300 can be automated.

According to this modification described above, the same advantages as those of the embodiment are achieved.

### (1-2) Other

While the finger holding mechanism 132 is configured to replaceably hold a pair of the finger members 40 in the above, the present disclosure is not limited thereto. That is, the finger holding mechanism may be configured to replaceably hold three or more finger members.

While the robot 10 is configured using a robot having seven axes in the above, the present disclosure is not limited thereto, allowing configuration using a robot having six axes or less.

Further, while the robot 10 is configured using a single-arm robot having only the one arm 12 in the above, the present disclosure is not limited thereto. That is, the robot may be configured using a multiple-armed robot having two or more arms.

Further, while two robots 10 comprising the arm 12, the hand 13, etc., are provided to the robot system 1 in the above, the present disclosure is not limited thereto. That is, just one robot may be provided, or three or more robots may be provided.

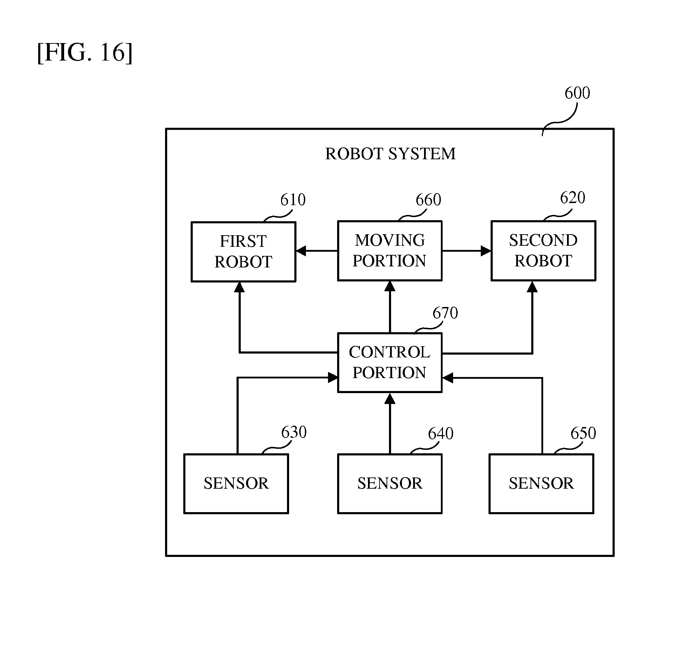

Next, second embodiment will be described with reference to FIG. 16 to FIG. 21. According to the robot system of second embodiment, two robots are shared in three work areas arranged side by side. According to the robot system of second embodiment, control that stops a robot is performed when the presence of a person is detected in a work area where a robot exists and work can be performed by the robot. On the other hand, control that stops a robot is not performed if the presence of a person is detected in a work area where a robot does not exist.

### Configuration

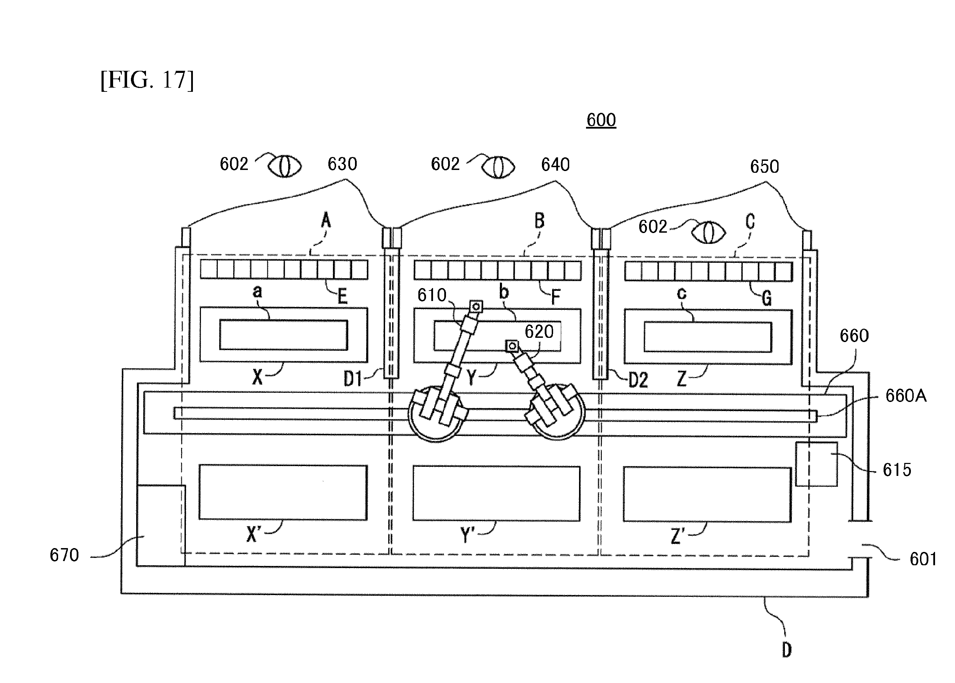

FIG. 16 is a diagram showing an overview of a robot system 600 according to second embodiment. FIG. 17 is a plan view showing the process layout of second embodiment. As shown in FIG. 16 and FIG. 17, the robot system 600 comprises a first robot 610, a second robot 620, a tool storage space 615, a sensor 630, a sensor 640, a sensor 650, a moving portion 660, and a control portion 670.

In this embodiment, the first robot 610 and the second robot 620 are vertical articulated robots with six or seven degrees of freedom, respectively. The first robot 610 and the second robot 620 are installed to the moving portion 660. The first robot 610 and the second robot 620 perform work on objects in part storage spaces E to G and on work tables X, X', Y, Y', Z, and Z'.

The control portion 670 comprises a single or plurality of controllers (computing devices). The control portion 670 controls the drive of the servo motors (not shown) of the first robot 610, the second robot 620, and the moving portion 660 based on an operation procedure stored in advance. Encoders that detect rotational positions are built into the servo motors of the first robot 610, and the second robot 620, and the moving portion 660. A detection signal of each encoder is respectively inputted into the control portion 670.

Further, the control portion 670 is connected with the sensors 630, 640, and 650. The signals of the sensors 630, 640, and 650 are inputted to the control portion 670.

As shown in FIG. 17, the robot system 600 is surrounded by a fence D and the part storage spaces E to G. A gate 601 is provided to the fence D. The gate 601 serves as an entrance into and an exit out from the fence D for the preparer when the operation of the robot system 600 has stopped. Note that the fence D may be configured in part or in whole using the walls, etc., of the building in which the robot system 600 is housed. The part storage spaces E to G are linearly disposed, and the moving portion 660 is arranged parallel thereto.

The first robot 610 and the second robot 620 are provided on a path 660A of the moving portion 660. The first robot 610 and the second robot 620 move on the path 660A when driven by the servo motor (not shown) controlled by the control portion 670.

A partition wall D1 is provided between the part storage spaces E and F. A partition wall D2 is provided between the part storage spaces F and G. The work area surrounded by the fence D and part storage spaces E to G forms a work area A (the dashed frame A in FIG. 17), a work area B (the dashed frame B in FIG. 17), and work area C (the dashed frame C in FIG. 17) divided along the partition walls D1 and D2.

According to this embodiment, the work areas A, B, and C each serve as a location (or an area) where the assembly work of machine units a, b, and c, each an assembled part made of a plurality of parts, is performed.

Further, the part storage space E, the work table X, and the work table X' are disposed in the work area A. The part storage space F, the work table Y, and the work table Y' are disposed in the work area B. The part storage space G, the work table Z, and the work table Z' are disposed in the work area C.

Then, according to the robot system 600, the first robot 610 and the second robot 620 are shared in the work areas A, B, and C.

That is, in the work areas A to C, at least one of the first robot 610 and the second robot 620 (hereinafter suitably and simply referred to as the "robots 610 and 620") executes the assembly work on the parts respectively set up in the part storage spaces E to G. As a result, an assembled part (sub-assembly) is manufactured.

Further, according to the robot system 600, the assembled product assembled in one of the work areas A to C is transported to another of the work areas A to C by the robots 610 and 620, making it possible to manufacture a more complex assembled part by implementing further assembly work.

According to this second embodiment, the first robot 610 and the second robot 620 are mainly gathered in a single work area, either the work area A, B, or C, and work in coordination to assemble the manufacturing machine unit. Note that the first robot 610 and the second robot 620 may be distributed to different work areas to perform work independently.

Next, an example of the work procedure executed by the robot system 600 will be described. The robots 610 and 620 perform the assembly work of a unit a in the work area A. Subsequently, the robots 610 and 620 perform the assembly work of a unit b in the work area B, and the assembly work of a unit c in the work area C. The robots 610 and 620 transport the unit a from the work area A to the work area B and perform the assembly work of the unit a and the unit b in the work area B, thereby manufacturing a unit ab (not shown) as an assembled part. Next, the robots 610 and 620 transport the unit c from the work area C to the work area B and perform the assembly work of the unit ab and the unit c in the work area B, thereby manufacturing a unit abc (not shown) as an assembled part. According to this embodiment, the unit abc is the final work piece.

At this time, the first robot 610 and the second robot 620 receive a command from the control portion 670, and perform work in work area A, B, or C. For example, to perform the assembly work of the unit b, the first robot 610 and the second robot 620 receive a command from the control portion 670 and get preferred parts from the part storage space F in coordination. Further, the first robot 610 and the second robot 620 temporarily store the parts on the work table Y. Furthermore, the first robot 610 and the second robot 620 carry the parts temporarily stored on the work table Y to the work table Y', and perform the assembly work of the unit b on the work table Y'.

Next, the control based on the detection and detection result of the sensors 630, 640, and 650 of this second embodiment will be described. The sensors 630, 640, and 650 are motion sensors that respectively detect whether or not a preparer (person) 602 is present near the part storage space E, F, or G. The information detected by the sensors 630, 640, and 650 is inputted to the control portion 670.

According to this embodiment, the sensors 630, 640, and 650 are transmissive area sensors. The sensors 630, 640, and 650 detect that the preparer 602 is present if a light obstructing object exists in the effective sensor detection range. The sensor 630 senses the preparer 602 when the preparer 602 supplies parts to the part storage space E provided within the work area A. The sensor 640 senses the hand of the preparer 602 when the preparer 602 supplies parts to the part storage space F provided within the work area B. The sensor 650 senses the preparer 602 when the preparer 602 supplies parts to the part storage space G provided within the work area C.

The moving portion 660 moves the first robot 610 and the second robot 620 from one work area to another work area along the path 660A as described above, based on an operation command from the control portion 670. Note that the moving portion 660 may comprise two separate axes: a first axis where the first robot 610 is moved, and a second axis where the second robot 620 is moved. Or, the moving portion 660 may comprises a single shared axis shared by both the first robot 610 and the second robot 620. When the moving portion 660 comprises a moving axis that is a single common axis, the first robot 610 and the second robot 620 are moved without changing relative positions.

Further, the movement by the moving portion 660 is performed when the work area is switched, for example. Or, the movement is performed when the first robot 610 and the second robot 620 perform work in coordination in a single work area and one of the robots is to retrieve parts or tools from another work area or a supply tool storage space 615, etc.

The control portion 670 receives a selection input of the work area where work is to be performed from the operator. Then, the control portion 670 controls the first robot 610, the second robot 620, and the moving portion 660 so that the first robot 610 and the second robot 620 perform work in the received work area following a program created in advance.

Further, the control portion 670 monitors whether or not a sensor (the sensor 630, 640, or 650) provided to a work area (hereinafter suitably "operation area") where at least one of the first robot 610 and the second robot 620 exists detects the presence of the preparer 602. For example, given that the work area A is the operation area, the control portion 670 monitors whether or not the sensor 630 detects the presence of the preparer 602. Further, for example, given that the work area B is the operation area, the control portion 670 monitors whether or not the sensor 640 detects the presence of the preparer 602. Further, for example, given that the work area C is the operation area, the control portion 670 monitors whether or not the sensor 650 detects the presence of the preparer 602. Note that, according to this embodiment, the control portion 670 detects the area where the first robot 610 and the second robot 620 exist based on the position information from the encoder corresponding to the moving portion 660.

Further, when the sensor provided to the operation area detects the presence of the preparer 602, the control portion 670 stops the robot (at least one of the first robot 610 and the second robot 620) that exists in the operation area. Then, the control portion 670 issues an alarm signal. At that time, whether or not a sensor (sensor 630, 640, or 650) provided to an area other than the operation area (hereinafter suitably "non-operation area") has detected the presence of the preparer 602 does not matter.

Further, when a sensor provided to the operation area has not detected the presence of the preparer 602, the control portion 670 does not execute stop control as described above on the robot (at least one of the first robot 610 and the second robot 620) that exists in the operation area. At that time as well, similar to the above, whether or not a sensor (the sensor 630, 640, or 650) provided to a non-operation area has detected the presence of the preparer 602 does not matter. For example, given that the work area A is the operation area, the control portion 670 does not stop the robot that exists in the operation area A when the sensor 630 does not detect the presence of the preparer 602. At that time, whether or not the sensor 640 provided to the work area B or the sensor 650 provided to the work area C has detected the presence of the preparer 602 does not matter. Further, for example, given that the work area B is the operation area, the control portion 670 does not stop the robot that exists in the operation area B when the sensor 640 has not detected the presence of the preparer 602. At that time, whether or not the sensor 630 provided to the work area A or the sensor 650 provided to the work area C has detected the presence of the preparer 602 does not matter. Further, for example, given that the work area C is the operation area, the control portion 670 does not stop the robot that exists in the operation area C when the sensor 650 has not detected the presence of the preparer 602. At that time, whether or not the sensor 630 provided to the work area A or the sensor 640 provided to the work area B detects the presence of the preparer 602 does not matter.

Further, when at least one of the first robot 610 and the second robot 620 has issued an alarm signal and stopped (hereinafter referred to as an "alarm/stop state"), the control portion 670 stops the issuance of the alarm signal and clears the stop state when an operator presses the Reset Alarm button (not shown).

Note that, before the moving portion 660 moves a robot (the first robot 610 and the second robot 620) from the work area where the robot exists to a predetermined work area, the control portion 670 monitors whether or not the sensor provided to the destination work area where the robot is to be moved has detected the presence of the preparer 602. Then, when the sensor has detected the presence of the preparer 602, the control portion 670 prohibits the robot from entering the destination work area, stopping the movement of the robot at a location prior to entry into the destination work area, etc. For example, before a robot is moved from the work area A to the work area B, the control portion 670 prohibits the robot from entering the work area B when the sensor 640 provided to the work area B has detected the presence of the preparer 602. The control portion 170 stops the movement of the robot at the location of the work area A.

Further, when the sensor provided to the destination work area where the robot is prohibited entry no longer detects the presence of the preparer 602, the control portion 670 permits the robot to enter the destination work area and the robot automatically recovers from the stop state. For example, when the sensor 640 provided to the work area B where robot entry is prohibited no longer detects the presence of the preparer 602, the control portion 670 permits the robot to enter the work area B. As a result, the control portion 670 moves the robot from the work area A to the work area B.

Further, the control portion 670 may issue a warning in the destination work area where entry is prohibited. For example, the control portion 670 encourages the preparer 602 who appears to be present in the work area B where robot entry is prohibited to exit that area. That is, the control portion 670 issues in the work area B an alarm sound or an automatic announcement that calls for exit from the work area B.

### Control method 1

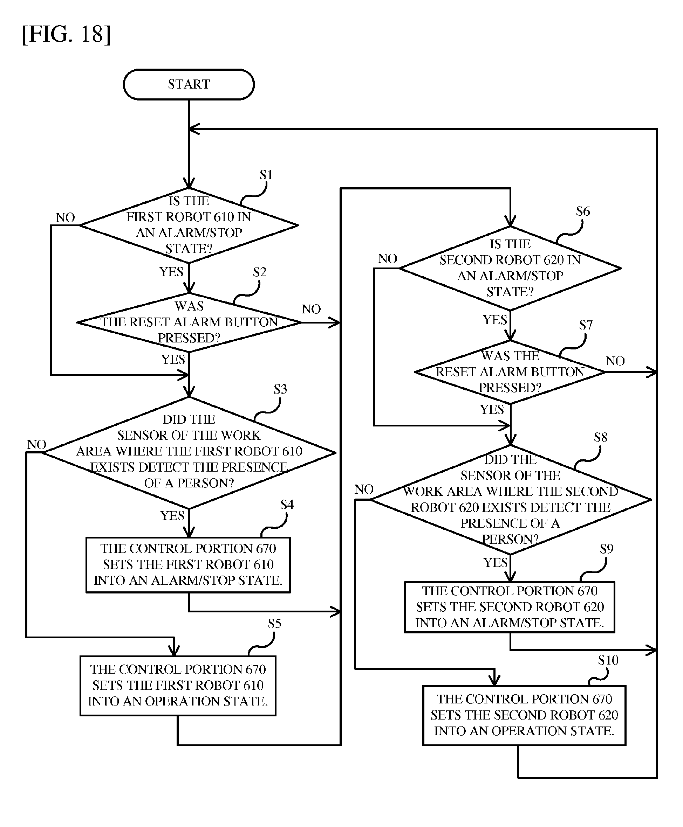

FIG. 18 is a flowchart showing an overview of the safety monitoring operation during work that is executed by the control portion 670 in order to achieve the above control details.

In step S1, first the control portion 670 determines whether or not the first robot 610 is in an alarm/stop state. If the first robot 610 is not in an alarm/stop state, the condition of step S1 is not satisfied (step S1: No), and the flow proceeds to step S3 described later. If the first robot 610 is in an alarm/stop state, the condition of step S1 is satisfied (step S1: Yes), and the flow proceeds to step S2.

In step S2, the control portion 670 determines whether or not the Reset Alarm button has been pressed. If the Reset Alarm button has not been pressed, the condition of step S2 is not satisfied (step S2: No), and the flow proceeds to step S6 described later. If the Reset Alarm button has been pressed, the condition of step S2 is satisfied (step S2: Yes), and the flow proceeds to step S3.

In step S3, the control portion 670 determines if the sensor provided to the work area where the first robot 610 exists has detected the presence of the preparer 602. For example, if the first robot 610 exists in the work area A, the control portion 670 determines if the sensor 630 has detected the presence of the preparer 602. If the sensor 630 has detected the presence of the preparer 602, the condition of step S3 is satisfied (step S3: Yes), and the flow proceeds to step S4.

In step S4, the control portion 670 sets the first robot 610 into an alarm/stop state. For example, if the sensor 630 provided to the work area A where the first robot 610 exists has detected the presence of the preparer 602, the control portion 670 sets the first robot 610 into a stop state. Subsequently, the flow proceeds to step S6 described later.

On the other hand, in the step S3, if the sensor 630 has not detected the presence of the preparer 602, the condition of step S3 is not satisfied (step S3: No), and the flow proceeds to step S5. In step S5, the control portion 670 maintains the operation state of the first robot 610 regardless of whether or not the sensor 640 and the sensor 650 have detected the presence of the preparer 602. Specifically, if the first robot 610 is in an alarm/stop state, for example, the control portion 670 cancels the alarm/stop state. Further, if the first robot 610 is in an operation state, the control portion 670 continues the operation state. Once step S5 ends, the flow proceeds to step S6.

In step S6, the control portion 670 determines whether or not the second robot 620 is in an alarm/stop state. If the second robot 620 is not in an alarm/stop state, the condition of step S6 is not satisfied (step S6: No), and the flow proceeds to step S8 described later. If the second robot 620 is in an alarm/stop state, the condition of step S6 is satisfied (step S6: Yes), and the flow proceeds to step S7.

In step S7, the control portion 670 determines whether or not the Reset Alarm button has been pressed. If the Reset Alarm button has not been pressed, the condition of step S7 is not satisfied (step S7: No), and the flow returns to the step S1 and the same procedure is repeated. If the Reset Alarm button has been pressed, the condition of step S7 is satisfied (step S7: Yes), and the flow proceeds to step S8.

In step S8, the control portion 670 determines if the sensor provided to the work area where the second robot 620 exists has detected the presence of the preparer 602. For example, if the second robot 620 exists in the work area A, the control portion 670 determines if the sensor 630 has detected the presence of the preparer 602. If the sensor 630 has detected the presence of the preparer 602, the condition of step S8 is satisfied (step S8: Yes), and the flow proceeds to step S9.

In step S9, the control portion 670 sets the second robot 620 into an alarm/stop state. For example, if the sensor 630 provided to the work area A where the second robot 620 exists has detected the presence of the preparer 602, the control portion 670 sets the second robot 620 into a stop state. Subsequently, the flow returns to the step S1 and the same procedure is repeated.

On the other hand, in the step S8, if the sensor 630 has not detected the presence of the preparer 602, the condition of step S8 is not satisfied (step S8: No), and the flow proceeds to step S10. In step S10, the control portion 670 maintains the operation state of the second robot 620 regardless of whether or not the sensor 640 and the sensor 650 have detected the presence of the preparer 602. Specifically, if the second robot 620 is in an alarm/stop state, for example, the control portion 670 cancels the alarm/stop state. Further, if the second robot 620 is in an operation state, the control portion 670 continues the operation state. Once step S10 ends, the flow returns to the step S1 and the same procedure is repeated.

### Control method 2

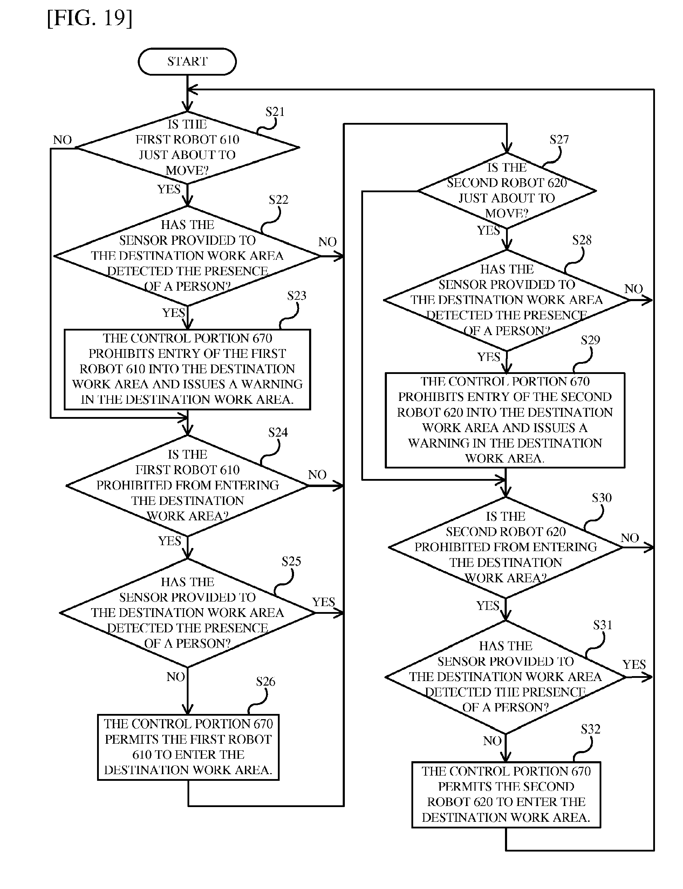

FIG. 19 is a flowchart showing an overview of the safety monitor operation during movement that is executed by the control portion 670.

In step S21, the control portion 670 monitors whether or not the first robot 610 is just about to move from one work area to another work area. If the first robot 610 is not just about to move from one work area to another work area, the condition of step S21 is not satisfied (step S21: No) and the flow proceeds to step S24 described later. If the first robot 610 is just about to move from one work area to another work area, the condition of step S21 is satisfied (step S21: Yes) and the flow proceeds to step S22.

In step S22, the control portion 670 monitors whether or not the sensor provided to the destination work area has detected the presence of the preparer 602. For example, when the first robot 610 is just about to move from the work area A to the work area B, the control portion 670 monitors whether or not the sensor 640 provided to the work area B has detected the presence of the preparer 602. If the sensor 640 has not detected the presence of the preparer 602, the condition of step S22 is not satisfied (step S22: No), and the flow proceeds to step S27 described later. If the sensor 640 has detected the presence of the preparer 602, the condition of step S22 is satisfied (step S22: Yes), and the flow proceeds to step S23.

In step S23, the control portion 670 prohibits entry of the first robot 610 into the destination work area. Further, the control portion 670 issues a warning in the destination work area of the first robot 610. For example, the control portion 670 issues an alarm sound or an automatic announcement that calls for exit from the destination work area. Subsequently, the flow proceeds to step S24.

In step S24, the control portion 670 determines whether or not entry of the first robot 610 into the destination work area is prohibited. If entry of the first robot 610 into the destination work area is not prohibited, the condition is not satisfied (step S24: No), and the flow proceeds to step S27 described later. If entry of the first robot 610 into the destination work area is prohibited, the condition is satisfied (step S24: Yes), and the flow proceeds to step S25 described later.

In step S25, the control portion 670 monitors whether or not the sensor provided to the destination work area of the first robot 610 has detected the presence of the preparer 602. If the sensor has detected the presence of the preparer 602, the condition is satisfied (step S25: Yes), and the flow proceeds to step S27 described later. If the sensor has not detected the presence of the preparer 602, the condition is not satisfied (step S25: No), and the flow proceeds to step S26.

In step S26, the control portion 670 permits entry of the first robot 610 into the destination work area. Subsequently, the flow proceeds to step S27.

In step S27, the control portion 670 monitors whether or not the second robot 620 is about to move from one work area to another work area. If the second robot 620 is not just about to move from one work area to another work area, the condition of step S27 is not satisfied (step S27: No) and the flow proceeds to step S30 described later. If the second robot 620 is just about to move from one work area to another work area, the condition of step S27 is satisfied (step S27: Yes) and the flow proceeds to step S28.

In step S28, the control portion 670 monitors whether or not the sensor provided to the destination work area has detected the presence of the preparer 602. For example, when the second robot 620 is just about to move from the work area A to the work area B, the control portion 670 monitors whether or not the sensor 640 provided to the work area B has detected the presence of the preparer 602. If the sensor 640 has not detected the presence of the preparer 602, the condition of step S28 is not satisfied (step S28: No), the flow returns to the step S21, and the same procedure is repeated. If the sensor 640 has detected the presence of the preparer 602, the condition of step S28 is satisfied (step S28: Yes), and the flow proceeds to step S29.

In step S29, the control portion 670 prohibits entry of the second robot 620 into the destination work area. Further, the control portion 670 issues a warning in the destination work area of the second robot 620. For example, the control portion 670 issues an alarm sound or an automatic announcement that calls for exit from the destination work area. Subsequently, the flow proceeds to step S30.

In step S30, the control portion 670 determines whether or not entry of the second robot 620 into the destination work area is prohibited. If entry of the second robot 620 into the destination work area is not prohibited, the condition is not satisfied (step S30: No), the flow returns to the step S21, and the same procedure is repeated. If entry of the second robot 620 into the destination work area is prohibited, the condition is satisfied (step S30: Yes), and the flow proceeds to step S31.

In step S31, the control portion 670 monitors whether or not the sensor provided to the destination work area of the second robot 620 has detected the presence of the preparer 602. If the sensor has detected the presence of the preparer 602, the condition is satisfied (step S31: Yes), the flow returns to the step S21, and the same procedure is repeated. If the sensor has not detected the presence of the preparer 602, the condition is not satisfied (step S31: No), and the flow proceeds to step S32.

In step S32, the control portion 670 permits entry of the second robot 620 into the destination work area. Subsequently, the flow returns to the step S21 and the same procedure is repeated.

As described above, according to the robot system 600 of this embodiment, control that stops the robots 610 and 620 is not performed if the presence of the preparer 602 is detected in a work area where the robots 610 and 620 do not exist and where work cannot be performed by the robots 610 and 620. As a result, the preparer 602 can execute the preparation process in another work area where robots do not exist while the robots 610 and 620 perform work in the work areas where the robots 610 and 620 do exist. That is, for example, the preparer 602 can safely enter the part storage spaces E to G of the work areas A to C other than that of the operation area, and set up the parts required for the assembly work of the work area. As a result, compared to a case where a plurality of types of assembled parts is manufactured in a single work area, the decrease in work efficiency caused by part preparation work can be alleviated. Further, if the presence of the preparer 602 is detected in a work area where the robots 610 and 620 exist and where work can be performed by the robots 610 and 620, stop control of the robots 610 and 620 is performed. With this arrangement, the work performed by the robots 610 and 620 can be appropriately stopped according to circumstance.

### (2-1) When one robot is shared between two work areas

According to the robot system of this modification, similar to second embodiment, control that stops a robot is performed when the presence of a preparer 702 is detected in a work area where a robot exists and where work can be performed by the robot. On the other hand, control that stops a robot is not performed if the presence of the preparer 702 is detected in a work area where a robot does not exist. The components that are the same as those in the second embodiment will be denoted using the same reference numerals, and descriptions thereof will be suitably omitted or simplified.

### Configuration

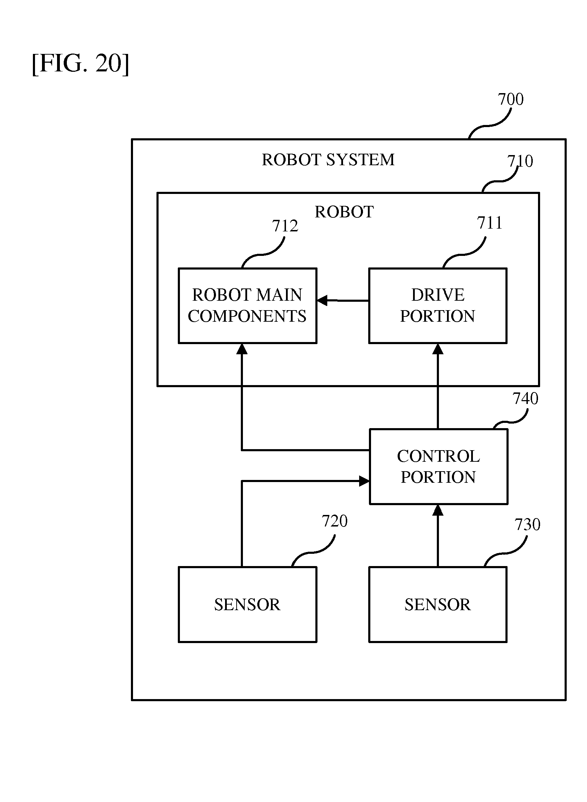

FIG. 20 is a diagram showing an overview of a robot system 700 according to this modification. As shown in FIG. 20, the robot system 700 comprises one robot 710, a sensor 720, a sensor 730, and a control portion 740.

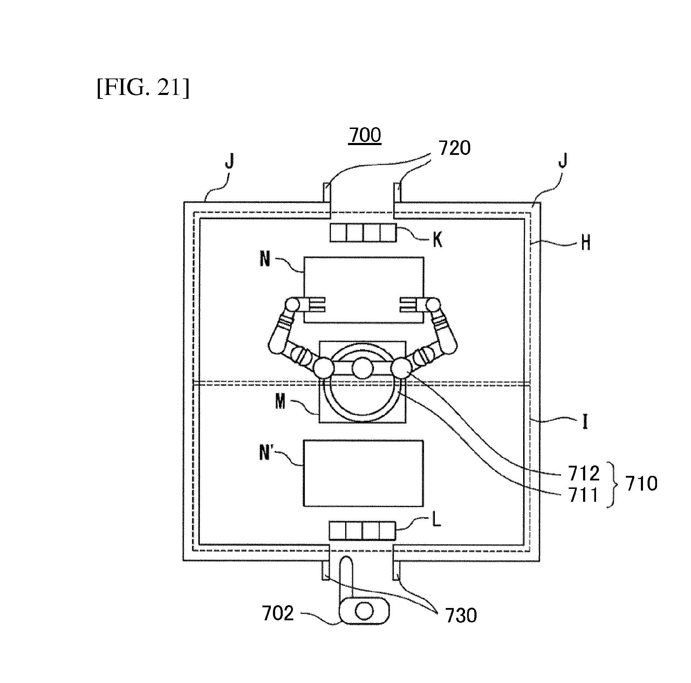

FIG. 21 is a plan view showing the process layout of this modification.

As shown in FIG. 21, the robot system 700 includes a work area H (the dashed frame H in FIG. 21) and a work area I (the dashed frame I in FIG. 21). Further, the robot system 200 further includes a fence J that surrounds the work area H and the work area I. A robot mount M for mounting the robot 710 is disposed within the fence J. The robot system 700 is a robot system that shares the robot 710 between two work areas: the work area H and the work area I. For example, the work areas H and I are locations (or areas) where the assembly work of units h and i (not shown) of manufacturing machines configured using a plurality of units is respectively performed. A part storage space K and a work table N are disposed in the work area H. A part storage space L and a work table N' are disposed in the work area I.

The robot 710 performs work in either the work area H or the work area I. The robot 710 receives a command from the control portion 740 and operates accordingly. According to this modification, the robot 710 is an articulated robot having six or seven axes, for example. For example, to perform the assembly work of the unit h, the robot 710 receives a command from the control portion 740 and gets preferred parts from the part storage space K. The robot 710 carries the parts to the work table N, and performs the assembly work of the unit h on the work table N. Further, to perform the assembly work of the unit i, the robot 710 receives a command from the control portion 740 and gets preferred parts from the part storage space L. The robot 710 carries the parts to the work table N', and performs the assembly work of the unit i on the work table N'.

Here, a drive portion (hereinafter referred to as "drive portion 711") of the robot 710 that is capable of rotating around the first axis closest to the robot mount M is capable of rotating all other axes (hereinafter referred to as "robot main components 712") horizontally. Accordingly, the drive portion 711 moves the robot main components 712 between the work area H and the work area I.

Accordingly, the drive portion 711 of this modification is equivalent to the moving portion 660 of the second embodiment. Further, the robot main components 712 of this modification are equivalent to the first robot 610 and the second robot 620 of the second embodiment. Further, the sensors 720 and 730 are equivalent to the sensors 630, 640, and 650 of the second embodiment. The sensor 720 senses the hand of the preparer (person) 702 when the preparer 702 supplies parts to the part storage space K provided within the work area H. Similarly, the sensor 730 senses the hand of the preparer 702 when the preparer 702 supplies parts to the part storage space L provided within the work area I.

The control portion 740 is equivalent to the control portion 660 of the second embodiment. That is, according to the control portion 740, the controlled robots are simply reduced from two to one, and the number of work areas from three to two. Other than these points, the control portion 740 is functionally the same as the control portion 660.

In the robot system 700 of the modification, the same advantages as those of the second embodiment are achieved. That is, according to the robot system 700, control that stops the robot 710 is not performed if the presence of the preparer 702 is detected in a work area where the robot 710 does not exist and where work cannot be performed by the robot 710. As a result, the preparer 702 can perform a preparation process in another work area where robots do not exist while the robot 710 performs work in the work area where the robot 710 exists. Further, stop control of the robot 710 is performed if the presence of the preparer 702 is detected in the work area where the robot 710 exists and where work can be performed by the robot 710. With this arrangement, the work performed by the robot 710 can be appropriately stopped according to circumstance.

### (2-2) When two robots are shared between three work areas

According to this modification, a robot system that shares two robots between three work areas arranged side by side is shown. The components that are the same as those in the second embodiment will be denoted using the same reference numerals, and descriptions thereof will be suitably omitted or simplified.

### Configuration

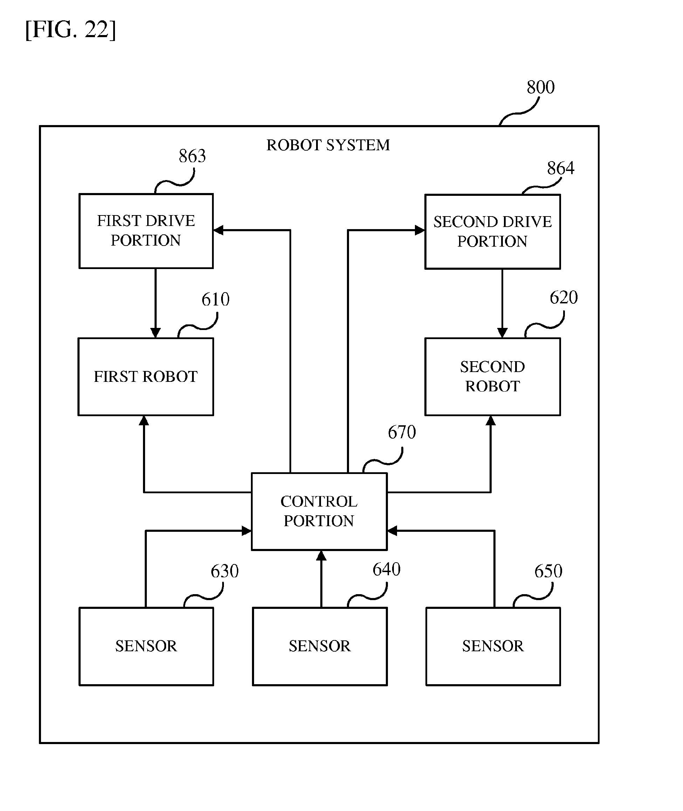

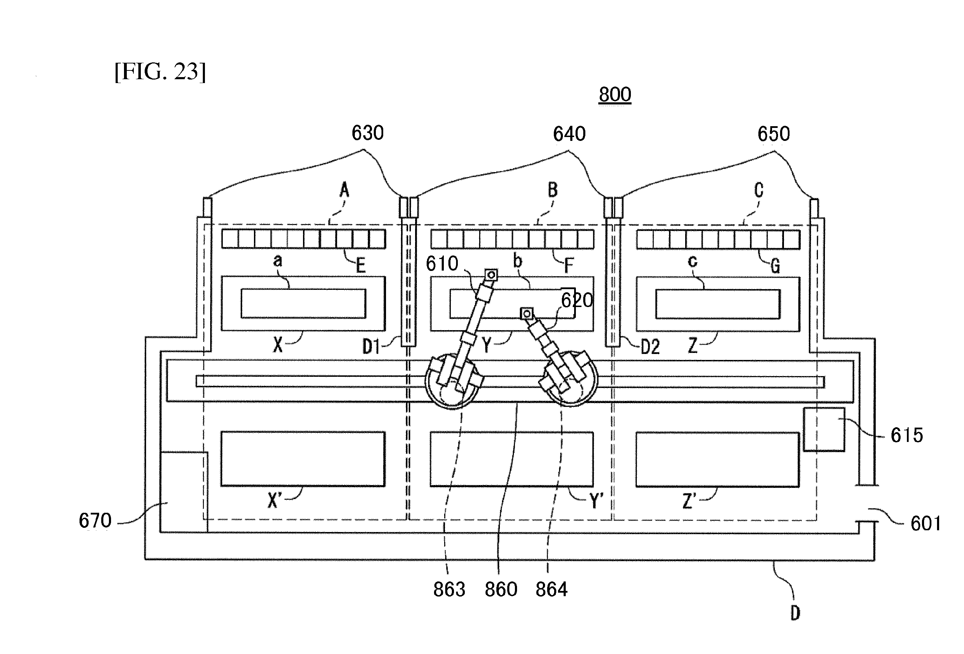

FIG. 22 is a diagram showing an overview of a robot system 800 according to this modification. FIG. 23 is a plan view showing the process layout of this modification. In FIG. 22 and FIG. 23, the robot system 800 comprises the first robot 610, the second robot 620, the sensor 630, the sensor 640, the sensor 650, a first drive portion 863, a second drive portion 864, and the control portion 670.

In this modification, the first robot 610 and the second robot 620 are vertical articulated robots capable of posture changes with six or seven degrees of freedom, for example, by the first drive portion 863 and the second drive portion (described in detail later). Then, the first robot 610 and the second robot 620 are each installed to a rack rail 860.

The control portion 670 controls the drive of servo motors described later of the first drive portion 863 and the second drive portion 864, based on an operation procedure stored in advance. An encoder that detects a rotational position is built into each of the servo motors, and the detection signals of the encoders are respectively inputted into the control portion 670.

The first robot 610 and the second robot 620 receive a command from the control portion 670, and perform predetermined work in work area A, B, or C. Then, according to this modification, the first robot 610 comprises a servo motor and at least one of the first drive portions 863, which comprises a pinion gear that is formed so that it engages with the rack of the rack rail 860 and rotates via the output of the servo motor. Further, the second robot 620 also comprises a servo motor and at least one of the second drive portions 864, which comprises a pinion gear that is formed so that it engages with the rack of the rack rail 860 and rotates via the output of the servo motor. The first drive portion 863 and the second drive portion 864 are driven by a command from the control portion 670, achieving an optimal suitable posture of the robots 610 and 620 required for each work previously described.

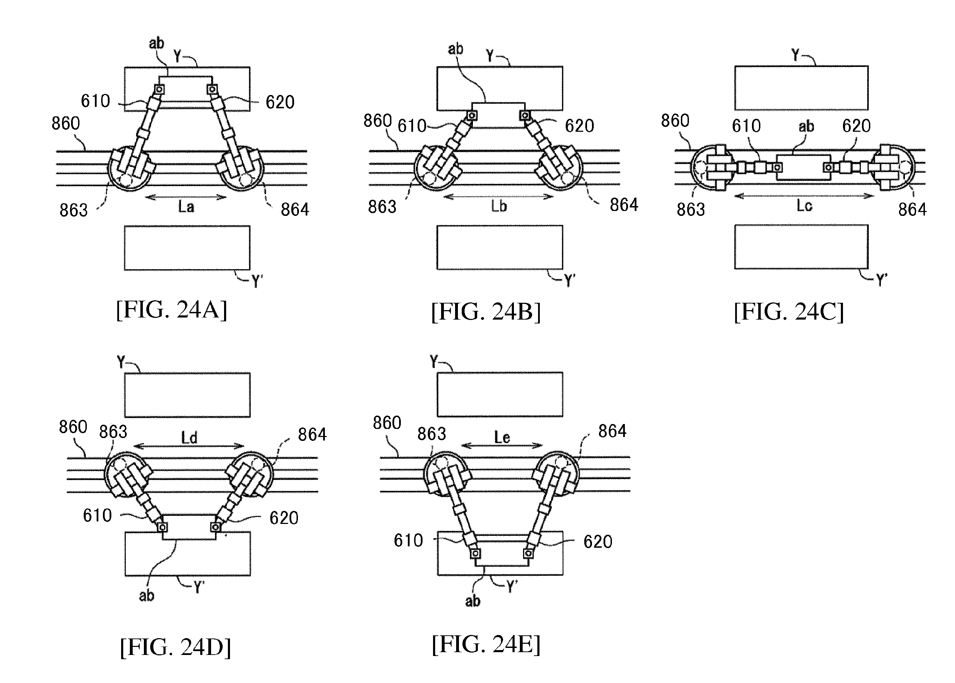

For example, to perform the assembly work of the unit b, the first robot 610 and the second robot 620 receive a command from the control portion 670 and get parts (target objects) from the part storage space F in coordination. The first robot 610 and the second robot 620 temporarily store the parts on the work table Y (first area). Furthermore, the first robot 610 and the second robot 620 transport the parts temporarily stored on the work table Y to the work table Y' (second area), and perform the assembly work of the unit b on the work table Y'. The various postures required for this work are achieved by the drive of the first drive portion 863 and the second drive portion 864 based on commands from the control potion 670. Note that the transport of the parts by the coordinated operation of the first robot 610 and the second robot 620 will be described later with reference to FIG. 24.

Further, the control portion 670 drives and controls the servo motors of the first drive portion 863 and the second drive portion 864, causing the first robot 610 and the second robot 620 to move along the rack rail 860. The control portion 670 instructs the servo motor of the first drive portion 863 so that the first robot 610 moves to the work area where work is to be performed. Similarly, the control portion 670 instructs the servo motor of the second drive portion 864 so that the second robot 620 moves to the work area where work is to be performed.

That is, the first drive portion 863 moves the first robot 610 along the rack rail 860 from a predetermined work area to another work area in coordination with the rack rail 860. Further, the second drive portion 864 works moves the second robot 620 along the rack rail 860 from a predetermined work area to another work area in coordination with the rack rail 860. The first drive portion 863 and the second drive portion 864 share the rack rail 860. The rack rail 860 links to a guide portion that movably supports the first robot 610 and the second robot 620.

Note that the rack rail 860 does not have to be shared between the first drive portion 863 and the second drive portion 864, allowing a first rail and a second rail respectively corresponding to the first drive portion 863 and the second drive portion 864 to be separately provided. In such a case, the first rail and second rail may be disposed in a parallel or non-parallel manner. Further, in this modification, the first drive portion 863 and the second drive portion 864 share the one rack rail 860 as described above. Accordingly, the first robot 610 and the second robot 620 move on the same path. On the other hand, when the rack rail 860 includes the first rail and second rail and the first drive portion 863 and the second drive portion 864 use separate rails, the first robot 610 and the second robot 620 can move on different paths. That is, the first drive portion 863 moves the first robot 610 along the first rail, and the second drive portion 864 moves the second robot 620 along the second rail.

Further, the control portion 670 can control the servo motor of the first drive portion 863 and the servo motor of the second drive portion 864 so that the first robot 610 and the second robot 620 work in coordination following a program created in advance. That is, the control portion 670 controls the servo motor of the first drive portion 863 of the first robot 610 and the servo motor of the second drive portion 864 of the second robot 620. With this arrangement, control is performed so that the work operation performed by the first robot 610 and the second robot 620 is linked with the positional movement of the first robot 610 and the second robot 620. The control portion 670 moves the first robot 610 and the second robot 620 to the same work area, and controls the first robot 610 and the second robot 620 so that they work in coordination on the same work target.

According to this modification, mainly the first robot 610 and the second robot 620 are moved to one of the work areas A, B, and C. Then, the first robot 610 and the second robot 620 work in coordination on the same work target, assembling in coordination a unit of a manufacturing machine. Note that while two robots, the first robot 610 and the second robot 620, are used according to this modification, three or more robots may be used.

### Operation

FIG. 24 shows an example of the work steps executed by the robot system 800 according to this modification. The work steps are executed according to an operation step in which the first robot 610 and the second robot 620 performed the predetermined work operation, and a moving step in which the locations of the first robot 610 and the second robot 620 are moved. The following describes a process wherein the unit ab assembled and manufactured using the unit a and the unit b in the work area B is held in coordination by the first robot 610 and the second robot 620, with reference to FIG. 24A to FIG. 24E. Subsequently, the following describes a process wherein the first robot 610 and the second robot 620 transport a target object from the work table Y (first area) to the work table Y' (second area) on the opposite side across the rack rail 860.

FIG. 24A is a schematic diagram showing a state (state a) in which the first robot 610 and the second robot 620 hold the object to be transported. The unit ab is provided on the work table Y as the object to be transported. The control portion 670 controls the servo motors of the first drive portion 863 and the second drive portion 864 so that the first robot 610 and the second robot 620 hold the unit ab. At this time, the distance between the locations of the first robot 610 and the second robot 620 is a distance La.

FIG. 24B is a schematic diagram showing a state (state b) in which the first robot 610 and the second robot 620 lift the unit ab. After the state a, the control portion 670 controls the servo motors of the first drive portion 863 and the second drive portion 864 so that the first robot 610 and the second robot 620 lift the unit ab. At this time, the amount of drive via each of the drive portions 863 and 864 of the first robot 610 and the second robot 620 is set within an optimal range stored in advance in the control portion 670 for transporting heavy objects. The optimum range is set by a pre-test or simulation and stored in the control portion 670 based on a load that includes the weights of the first robot 610 and the second robot 620, for example.

Further, the control portion 670 controls the servo motors of the first drive portion 863 and the second drive portion 864 so that the locations of the first robot 610 and the second robot 620 are moved. As a result, the distance between the locations of the first robot 610 and the second robot 620 increases from the distance La to a distance Lb (distance La < distance Lb).

As the first robot 610 and the second robot 620 lift the unit ab, the first drive portion 863 moves the first robot 610 along the rack rail 860. Further, the second drive portion 864 moves the second robot 620 in the direction opposite the moving direction of the first robot 610 (the direction away from the location of the first robot 610) along the rack rail 860.

FIG. 24C is a schematic diagram showing a state (state c) in which the first robot 610 and the second robot 620 transport the unit ab. After the state b, the control portion 670 controls the servo motors of the first drive portion 863 and the second drive portion 864 so that the first robot 610 and the second robot 620 transport the unit ab across the rack rail 860. Further, the control portion 670 controls the servo motors of the first drive portion 863 and the second drive portion 864 so that the locations of the first robot 610 and the second robot 620 are moved. As a result, the distance between the locations of the first robot 610 and the second robot 620 increases from the distance Lb to a distance Lc (distance La < distance Lb < distance Lc).

As the first robot 610 and the second robot 620 transport the unit ab, the first drive portion 863 moves the first robot 610 further along the rack rail 860. Further, the second drive portion 864 moves the second robot 620 further in the direction opposite the moving direction of the first robot 610 (the direction away from the location of the first robot 610) along the rack rail 860.

FIG. 24D is a schematic diagram showing a state (state d) in which the first robot 610 and the second robot 620 transport the unit ab. After the state c, the control portion 670 controls the servo motors of the first drive portion 863 and the second drive portion 864 so that the first robot 610 and the second robot 620 transport the unit ab across the rack rail 860 toward the work table Y'. Further, the control portion 670 controls the servo motors of the first drive portion 863 and the second drive portion 864 so that the locations of the first robot 610 and the second robot 620 are moved. As a result, the distance between the locations of the first robot 610 and the second robot 620 decreases from the distance Lc to a distance Ld (distance Lc > distance Ld).

As the first robot 610 and the second robot 620 transport the unit ab, the first drive portion 863 moves the first robot 610 further along the rack rail 860. Further, the second drive portion 864 moves the second robot 620 further in the direction opposite the moving direction of the first robot 610 (the direction approaching the location of the first robot 610) along the rack rail 860.

FIG. 24E is a schematic diagram showing a state (state e) in which the first robot 610 and the second robot 620 provide the unit ab onto the work table Y'. After the state d, the control portion 670 controls the servo motors of the first drive portion 863 and the second drive portion 864 so that the first robot 610 and the second robot 620 provide the unit ab onto the work table Y'. Further, the control portion 670 controls the first drive portion 863 and the second drive portion 864 so that the locations of the first robot 610 and the second robot 620 are moved. As a result, the distance between the locations of the first robot 610 and the second robot 620 decreases from the distance Ld to a distance Le (distance Ld > distance Le).

As the first robot 610 and the second robot 620 transport the unit ab, the first drive portion 863 moves the first robot 610 further along the rack rail 860. Further, the second drive portion 864 moves the second robot 620 further in the direction opposite the moving direction of the first robot 610 (the direction approaching the location of the first robot 610) along the rack rail 860.

According to the above example, the moving of the locations of the first robot 610 and the second robot 620 (moving step) is executed by moving both the locations of the first robot 610 and the second robot 620. Nevertheless, the present disclosure is not limited to moving both. That is, it is sufficient to change (changing step) at least one of the locations of the first robot 610 and the second robot 620 in accordance with the execution of the transport (transporting step) of the unit ab from the state a to the state e. For example, the distance between the locations of the first robot 610 and the second robot 620 may be changed by changing the location of the second robot 620 and not the location of the first robot 610.

Further, the first drive portion 863 and the second drive portion 864 are not necessarily limited to a configuration that includes a pinion and motor, as long as the first robot 610 and the second robot 620 are movable along the guide portion 860. Furthermore, the guide portion 860 is not necessarily limited to the rack rail as long as the first robot 610 and the second robot 620 are movably supported. For example, in a case where the first drive portion 863 and the second drive portion 864 include a linear motor and the guide portion 860 includes a rail, the robots can be moved in a non-contact manner by magnetic levitation.

### Conclusion

As described above, according to the robot system of this modification, the first drive portion 863 and the second drive portion 864 play the role of respectively moving the first robot 610 and the second robot 620 along the rack rail 860, as well as the role of changing the postures of the first robot 610 and the second robot 620 in order to execute preferred work. That is, it is possible to perform work using a single robot or a plurality of robots in coordination, in accordance with work details. Accordingly, it is possible to prevent specifications from becoming excessive, such as in a case where a full-time mechanism is provided for simply moving robots. Further, the variation in work can be increased and the movable area during coordinated work can be enlarged. Furthermore, the transportable weight can be increased by making a plurality of robots hold the target object.

In particular, according to this modification, it is possible transport a large object to be transported (the unit ab in the above example) while applying the robots 610 and 620 of relatively small sizes. That is, normally a robot that is capable of transporting heavy weight by itself has increased dimensions, making small handling such as assembly difficult. Conversely, according to this modification, it is possible to use a small robot of a size capable of smoothly implementing the process of assembling relatively small parts to assemble a sub-assembly (the units a, b, and c). Then, by controlling in coordination the two small robots 610 and 620, it is possible to further transport a large object to be transported that is the result of assembling a plurality of sub-assemblies.

Further, in particular, according to this modification, the drive of the drive portions 863 and 864 at the time of transport actively adjusts the distance between each of the robots 610 and 620. With this arrangement, it is possible to transport the object to be transported with the postures of each of the robots 610 and 620 held within an optimal range for transporting a heavy object. With this arrangement, even if the weight is greater than the sum of the transportable weight of each robot based on standards, the object to be transported can be stably transported. Further, because the object to be transported is supported by each robot at respectively different locations, the decrease in the moment load of each robot serves as an advantage when transporting a heavy object to be transported, compared to a case of cantilevered support.

Note that while, according to the above, the present disclosure is applied to a case where each of the robot systems performs the assembly work of a machine product, the present disclosure is not limited thereto. That is, the present disclosure may be applied to a case where the robot system performs other work.

Further, other than that already stated above, techniques based on each of the above embodiments and modifications may be suitably used in combination well.

Although other examples are not individually described herein, various changes can be made to each of the above embodiments and modifications without departing from the spirit and scope of the present disclosure.
E.g., further embodiments of the invention are as follows:
   According to a first further embodiment, a robot system (600; 700) is provided, comprising a robot (610, 620; 710) configured to perform work in one of a plurality of work areas (A, B, C; H, I), comprising a plurality of sensors (630, 640, 650; 720, 730) configured to detect the presence of a person, respectively provided to the plurality of the work areas (A, B, C; H, I); and a control portion (670; 740) which stops the robot (610, 620; 710) which exists in one work area (A, B, C; H, I) when the sensor (630, 640, 650; 720, 730) provided to the one work area (A, B, C; H, I) detects the presence of a person, regardless of whether or not the sensor (630, 640, 650; 720, 730) provided to another work area (A, B, C; H, I) other than the one work area (A, B, C; H, I) where the robot (610, 620; 710) exists has detected the presence of a person.
   According to a second further embodiment, the robot system (600; 700) according to the first further embodiment is provided, further comprising a moving portion (660; 711) which moves the robot (610, 620; 710) which exists in the one work area (A, B, C; H, I) to the other work area (A, B, C; H, I), wherein the control portion (670; 740) prohibits entry of the robot (610, 620; 710) into a destination work area (A, B, C; H, I) where the moving portion (660; 711) is about to move the robot (610, 620; 710) when the sensor (630, 640, 650; 720, 730) provided to the destination work area (A, B, C; H, I) detects the presence of a person.
   According to a third further embodiment, the robot system (600; 700) according to the second further embodiment is provided, wherein the control portion (670; 740) permits entry of the robot (610, 620; 710) to the destination work area (A, B, C; H, I) when the sensor (630, 640, 650; 720, 730) provided to the destination work area (A, B, C; H, I) where the robot (610, 620; 710) is prohibited entry no longer detects the presence of a person.
   According to a fourth further embodiment, the robot system (600; 700) according to second or third further embodiment is provided, wherein the control portion (670; 740) issues a warning in the destination work area (A, B, C; H, I) where the robot (610, 620; 710) is prohibited entry.
   According to a fifth further embodiment, an operating method of a robot system (600; 700) which comprises a robot (610, 620; 710) configured to perform work in one of a plurality of work areas (A, B, C; H, I) and a plurality of sensors (630, 640, 650; 720, 730) configured to detect the presence of a person, respectively provided to the plurality of the work areas (A, B, C; H, I), is provided, wherein the method comprises a control step (S4, S9) for stopping the robot (610, 620; 710) which exists in one work area (A, B, C; H, I) when the sensor (630, 640, 650; 720, 730) provided to the one work area (A, B, C; H, I) detects the presence of a person, regardless of whether or not the sensor (630, 640, 650; 720, 730) provided to another work area (A, B, C; H, I) other than the one work area (A, B, C; H, I) where the robot (610, 620; 710) exists has detected the presence of a person.
   According to a sixth further embodiment a robot system (800) is provided, comprising a first robot (610) comprising a first drive portion (863) configured to achieve various postures for performing predetermined work; a second robot (620) comprising a second drive portion (864) configured to achieve various postures for performing predetermined work; a guide portion (860) configured to, in coordination with the first drive portion (863) of the first robot (610) and the second drive portion (864) of the second robot (620), moveably support the first robot (610) and the second robot (620); and a control portion (670) configured to control in coordination the first drive portion (863) and the second drive portion (864) so that an operation of the predetermined work of the first robot (610) and the second robot (620) is linked with a location movement of the first robot (610) and the second robot (620) along the guide portion (860).
   According to a seventh further embodiment, the robot system (800) according to the sixth further embodiment is provided, wherein the first drive portion (863) moves the first robot (610) along the guide portion (860); and the second drive portion (864) moves the second robot (620) along the guide portion (860).
   According to an eighth further embodiment, the robot system (800) according to the seventh further embodiment is provided, wherein the guide portion (860) includes a first rail and a second rail; the first drive portion (863) moves the first robot (610) along the first rail; and the second drive portion (864) moves the second robot (620) along the second rail.
   According to a ninth further embodiment, the robot system (800) according to any one of the sixth to eighth further embodiments is provided, wherein the first drive portion (863) and the second drive portion (864) each include a pinion and a motor.
   According to a tenth further embodiment, an operating method of a robot system including a first robot (610) including a first drive portion (863) configured to achieve various postures for performing predetermined work, a second robot (620) including a second drive portion (864) configured to achieve various postures for performing predetermined work, and a guide portion (860) configured to, in coordination with the first drive portion (863) of the first robot (610) and the second drive portion (864) of the second robot (620), moveably supports the first robot (610) and the second robot (620), is provided, the method comprising a control step for controlling in coordination the first drive portion (863) of the first robot (610) and the second drive portion (864) of the second robot (620) so that an execution operation of the predetermined work of the first robot (610) and the second robot (620) is linked with a location movement of the first robot (610) and the second robot (620) along the guide portion (860).
   According to an eleventh further embodiment, the operating method according to the tenth further embodiment is provided, wherein the control step comprises an operation step that the first robot (610) and the second robot (620) perform an execution operation of the predetermined work; and a moving step that the locations of the first robot (610) and the second robot (620) are moved.
   According to a twelfth further embodiment, the operating method according to the eleventh further embodiment is provided, wherein the operation step comprises a holding step that the first robot (610) and the second robot (620) hold a target object (ab) positioned in a first area; and a transporting step that the first robot (610) and the second robot (620) transport the target object (ab) from the first area to a second area on an opposite side across the guide portion (860), with the target object (ab) held by the first robot (610) and the second robot (620).
   According to a thirteenth further embodiment, the operating method according to the twelfth further embodiment is provide, wherein the moving step comprises a changing step for changing at least one of the location of the first robot (610) and the location of the second robot (620) in accordance with an execution of the transporting step.

## Claims

1. A robot system (1), comprising
a robot arm (12);
a robot hand (13) provided to the robot arm (12); and
a plurality of finger members (40) for holding a target object (W; 200), installed to the robot hand (13), wherein
the robot hand (13) comprises
a hand main body portion (131) which is connected to the robot arm (12) and comprises an actuator; and
a finger holding mechanism (132) which replaceably holds at least a pair of the finger members (40) is connected to the hand main body portion (131) and is driven by the actuator.

2. The robot system (1) according to claim 1, wherein
the finger holding mechanism (132) comprises a pair of finger holding portions (134) which is connected to the hand main body portion (131) in an facing manner, is driven in directions mutually away from and toward each other by the actuator, and replaceably holds one of a plurality of pairs of the finger members (40); and
each of the pairs of the finger holding portions (134) comprises
a receiving space (135) which is configured to receive the finger member (40) and is provided to a side facing the other of the finger holding portions (134); and
a plurality of link members (136, 137, 138, 139) including a first link member (138) capable of engaging with the finger member (40) received in the receiving space (135).

3. The robot system (1) according to claim 2, wherein
the plurality of link members (136, 137, 138, 139) includes
the first link member (138) which is provided rotatably around a first rotation axis (SH2) and is capable of transitioning between an engaged posture which engages with the finger member (40) and a released posture which releases the engagement with the finger member (40) when rotated around the first rotation axis (SH2); and
a second link member (136) which is connected to the first link member (138), is provided rotatably around a second rotation axis (SH1), and rotates the first link member (138) in the engaged posture in a second direction around the first rotation axis (SH2) to form the released posture when rotated in a first direction around the second rotation axis (SH1).

4. The robot system (1) according to claim 3, wherein
the second link member (136) comprises an exposed operating surface (136a) and rotates in the first direction when the operating surface (136a) is pressed.

5. The robot system (1) according to claim 4, wherein
each of the pairs of finger holding portions (134) comprises an elastic member (142) which energizes the second link member (136) so that the first link member (138) forms the engaged posture when the operating surface (136a) is not pressed.

6. The robot system (1) according to any one of claims 2 to 5, wherein
the first link member (138) comprises a protruding portion (138a) which protrudes within the receiving space (135) and contacts a surface of the finger member (40) received in the receiving space (135), the surface being on a side opposite to a surface which contacts the target object (W; 200); and
each of the plurality of finger members (40) comprises a concave portion (40a) which is engaged by the protruding portion (138a) on the surface on the side opposite to the surface which contact the target object (W; 200).

7. The robot system (1) according to any one of claims 4 to 6, further comprising a pressing device (60) comprising a pressing member (61) for pressing the operating surface (136a).

8. A robot hand for a robot system (1) according to any one of claims 1 to 7, comprising
a hand main body portion configured to connect to a robot arm;
an actuator configured to drive the hand main body portion;
a finger holder replaceably holds at least a pair of a plurality of finger members for holding a target object.
